# EUROPEAN PATENT APPLICATION

(11) **EP 4 618 486 A1**
(43) Date of publication of application: **17.09.2025**
(21) Application number: 22964892.8
(22) Date of filing: 11.11.2022
(51) Int. Cl.: H04L 27/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); ZHANG, Jinyu, Dongguan, Guangdong 523860 (CN); XU, Weijie, Dongguan, Guangdong 523860 (CN)
(74) Representative: Mewburn Ellis LLP
(86) International application number: PCT/CN2022/131548
(87) International publication number: WO 2024/098424

(57) **Abstract**

Provided in the embodiments of the present application are a wireless communication method and device. The present invention can reduce the number of anchor devices that perform backscatter communication while meeting the positioning precision requirement, reduce mutual interference between backscatter signals, and reduce the complexity of positioning processing. The wireless communication method comprises: a first device executing a first operation to control the number of anchor devices participating in positioning of a target device by means of backscatter communication, wherein the first operation is at least one of the following: adjusting the transmission power of a carrier signal, sending first control signaling, and scheduling some or all pre-identified anchor devices; and wherein the carrier signal is used to generate a backscatter signal by means of modulation, and the first control signaling is used to indicate signal strength information of the carrier signal when the anchor devices participating in positioning of the target device perform backscattering, or the first control signaling is used to indicate feature information of the anchor devices participating in positioning of the target device.

## Description

### TECHNICAL FIELD

Embodiments of the present disclosure relate to the field of communications, and in particular, to a wireless communication method and device.

### BACKGROUND

A zero power consumption device has low complexity, low cost, can be maintenance-free and battery-free, may support power harvesting and/or back scattering communication, and may achieve a high-density and large-scale deployment at a lower cost. During the deployment, the zero power consumption device may be used as an anchor for positioning, to assist in positioning and improve accuracy of the positioning. However, if the number of anchors for assisting in positioning is too large, back scattering signals of various anchor devices will also cause mutual interference, thereby affecting the accuracy of the positioning.

### SUMMARY

Embodiments of the present disclosure provide a wireless communication method and device, which can reasonably control the number of anchor devices participating in positioning of a target device via back scattering communication. It reduces the number of anchor devices for performing back scattering communication while meeting accuracy of the positioning, which may reduce the mutual interference between back scattering signals and reduce complexity of the positioning processing. When a positioning requirement cannot be met, the number of anchor devices for performing back scattering communication is increased, to support completion of the positioning.

In a first aspect, a wireless communication method is provided, and the method includes:
controlling, by a first device, by performing a first operation, a number of anchor devices participating in positioning of a target device via back scattering communication;
where the first operation is at least one of: adjusting of transmission power of a carrier signal, transmitting of first control signaling, and scheduling of a part or all of pre-identified anchor devices; and
where the carrier signal is used to generate a back scattering signal via modulation, and the first control signaling is used to indicate signal strength information of a carrier signal when an anchor device participating in the positioning of the target device performs back scattering, or the first control signaling is used to indicate feature information of an anchor device participating in the positioning of the target device.

In a second aspect, a wireless communication device is provided, and is configured to perform the method in the above first aspect.

Specifically, the wireless communication device includes a functional module for performing the method in the above first aspect.

In a third aspect, a wireless communication device is provided, and includes a processor and a memory; the memory is configured to store a computer program, and the processor is configured to call and run the computer program stored in the memory, to enable the wireless communication device to perform the method in the above first aspect.

In a fourth aspect, an apparatus is provided, and is configured to implement the method in the above first aspect.

Specifically, the apparatus includes a processor, configured to call a computer program from a memory and run the computer program, to enable a device equipped with the apparatus to perform the method in the above first aspect.

In a fifth aspect, a computer-readable storage medium is provided, the computer-readable storage medium is configured to store a computer program, and the computer program enables a computer to perform the method in the above first aspect.

In a sixth aspect, a computer program product is provided, and includes computer program instructions, and the computer program instructions enable a computer to perform the method in the above first aspect.

In a seventh aspect, a computer program is provided, and the computer program, when executed on a computer, enables the computer to perform the method in the above first aspect.

Through the above technical solutions, the first device may control, by performing the first operation, the number of the anchor devices participating in the positioning of the target device via back scattering communication. That is, the first device can reasonably control the number of the anchor devices participating in the positioning of the target device via back scattering communication. It decreases the number of anchor devices for performing back scattering communication while meeting accuracy of the positioning, which reduces the mutual interference between back scattering signals and reduces complexity of the positioning processing. When a positioning requirement cannot be met, the number of anchor devices for performing back scattering communication is increased, to support completion of the positioning.

### BRIEF DESCRIPTION OF THE DRAWINGS

FIG. 1 is a schematic diagram of a communication system architecture applied in embodiments of the present disclosure.
FIG. 2 is a schematic diagram of zero power consumption communication provided by the present disclosure.
FIG. 3 is a schematic diagram of back scattering communication provided by the present disclosure.
FIG. 4 is a schematic diagram of power harvesting provided by the present disclosure.
FIG. 5 is a circuit schematic diagram of resistive load modulation provided by the present disclosure.
FIG. 6 is a schematic diagram of back scattering communication ranges supported by carrier signals with different kinds of signal strength provided by the present disclosure.
FIG. 7 is a schematic diagram of mutual interference between back scattering of multiple anchor devices provided by the present disclosure.
FIG. 8 is a schematic flowchart of a wireless communication method provided according to the embodiments of the present disclosure.
FIG. 9 to FIG. 12 are schematic scene diagrams of positioning based on back scattering provided by the embodiments of the present disclosure, respectively.
FIG. 13 is a schematic diagram of signal strength of a carrier signal reaching an anchor device provided by the embodiments of the present disclosure.
FIG. 14 is another schematic diagram of signal strength of a carrier signal reaching an anchor device provided by the embodiments of the present disclosure.
FIG. 15 is a schematic diagram of a group identity of an anchor device provided by the embodiments of the present disclosure.
FIG. 16 is a schematic diagram of another group identity of an anchor device provided by the embodiments of the present disclosure.
FIG. 17 is a schematic block diagram of a wireless communication device provided according to the embodiments of the present disclosure.
FIG. 18 is a schematic block diagram of a communication device provided according to the embodiments of the present disclosure.
FIG. 19 is a schematic block diagram of an apparatus provided according to the embodiments of the present disclosure.
FIG. 20 is a schematic block diagram of a communication system provided according to the embodiments of the present disclosure.

### DETAILED DESCRIPTION

Technical solutions in the embodiments of the present disclosure will be described below in conjunction with drawings of the embodiments of the present disclosure. Obviously, the described embodiments are some but not all of the embodiments of the present disclosure. All other embodiments obtained by those ordinary skilled in the art based on the embodiments of the present disclosure without creative efforts shall fall within the protection scope of the present disclosure.

The technical solutions in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication networks (Non-Terrestrial Networks, NTN) system, a universal mobile telecommunications system (UMTS), wireless local area networks (WLAN), internet of things (IoT), wireless fidelity (WiFi), a 5th-generation (5G) communication system, 6th-generation (6G) communication system or other communication systems, etc.

Generally speaking, traditional communication systems support a limited number of connections, which is also easy to be implemented. However, with the development of the communication technology, mobile communication systems will not only support traditional communications, but also support, for example, device to device (D2D) communication, machine to machine (M2M) communication, machine type communication (MTC), vehicle to vehicle (V2V) communication, sidelink (SL) communication, vehicle to everything (V2X) communication, etc. The embodiments of the present disclosure may be applied to these communication systems as well.

In some embodiments, the communication system in the embodiments of the present disclosure may be applied to a carrier aggregation (CA) scenario, a dual connectivity (DC) scenario, and may also be applied to a standalone (SA) network deployment scenario or a non-standalone (NSA) network deployment scenario.

In some embodiments, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may be considered as an unshared spectrum.

In some embodiments, the communication system in the embodiments of the present disclosure may be applied to a FR1 band (corresponding to a frequency band range of 410 MHz to 7.125 GHz), and may also be applied to an FR2 frequency band (corresponding to a frequency band range of 24.25 GHz to 52.6 GHz), and may also be applied to a new frequency band, such as a high-frequency band corresponding to a frequency band range of 52.6 GHz to 71 GHz or corresponding to a frequency band range of 71 GHz to 114.25 GHz.

In the embodiments of the present disclosure, various embodiments are described in conjunction with a network device and a terminal device, where the terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STATION, ST) in the WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (Public Land Mobile Network, PLMN) network, or the like.

In the embodiments of the present disclosure, the terminal device may be deployed on land, including indoor or outdoor, handheld, wearable, or in-vehicle; the terminal device may also be deployed on water (e.g., on a steamship, etc.); the terminal device may also be deployed in air (e.g., on an airplane, on a balloon, or on a satellite, etc.).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, an in-vehicle communication device, a wireless communication chip/application specific integrated circuit (ASIC)/system on chip (SoC), or the like.

As an example but not a limitation, in the embodiments of the present disclosure, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into the clothes or accessories of users. The wearable device not only is a hardware device, but also implements powerful functions by software support as well as data interaction or cloud interaction. Generalized wearable smart devices include devices, that are fully functional, large in size and may implement full or partial functions without relying on smart phones, such as smart watches or smart glasses; as well as devices, that only focus on a certain type of application function and need to be used in conjunction with other devices (e.g., a smart phone), such as various smart bracelets and smart jewelry that monitor physical signs, or the like.

In the embodiments of the present disclosure, the network device may be a device for communicating with a mobile device, and the network device may be an access point (AP) in the WLAN, a base station (Base Transceiver Station, BTS) in the GSM or CDMA, or may also be a base station (NodeB, NB) in the WCDMA, or may also be an evolutional base station (Evolutional Node B, eNB or eNodeB) in the LTE, or a relay station or an access point, or an in-vehicle device, a wearable device, a network device or a base station (gNB) or a transmission reception point (TRP) in the NR network, a network device in the future evolved PLMN network, a network device in the NTN network, or the like.

As an example but not a limitation, in the embodiments of the present disclosure, the network device may have mobile characteristics. For example, the network device may be a mobile device. In some embodiments, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. In some embodiments, the network device may also be a base station disposed on land, water, or other places.

In the embodiments of the present disclosure, the network device may provide a service for a cell, and the terminal device communicates with the network device through a transmission resource (e.g., a frequency domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with high speed.

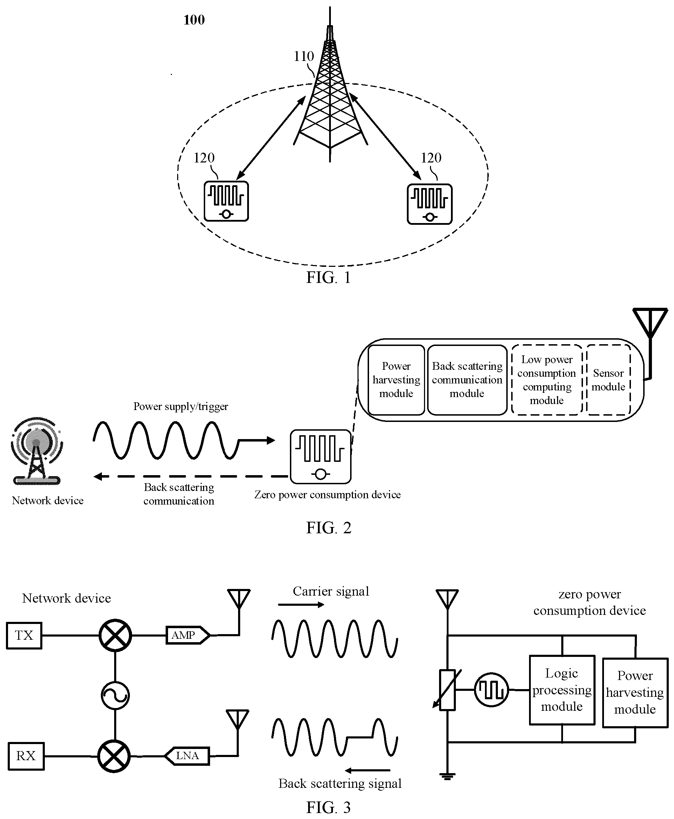

Exemplarily, a communication system 100 applied by the embodiments of the present disclosure is shown in FIG. 1. The communication system 100 may include a network device 110, and the network device 110 may be a device that communicates with terminal devices 120 (or referred to as communication terminals or terminals). The network device 110 may provide communication coverage for a specific geographical area and may communicate with terminal devices located within the coverage area.

FIG. 1 exemplarily shows one network device and two terminal devices. In some embodiments, the communication system 100 may include a plurality of network devices, and there may be another number of terminal devices within the coverage range of each network device, which are not limited in the embodiments of the present disclosure.

In some embodiments, the communication system 100 may further include other network entities such as a network controller, a mobility management entity, or the like, which are not limited in the embodiments of the present disclosure.

It should be understood that, in the embodiments of the present disclosure, a device with a communication function in the network/system may be referred to as a communication device. Taking the communication system 100 shown in FIG. 1 as an example, the communication device may include a network device 110 with a communication function and a terminal device 120 with a communication function. The network device 110 and the terminal device 120 may be the specific devices described above, which will not be repeated here. The communication device may further include other devices in the communication system 100, such as a network controller, a mobility management entity, and other network entities, which are not limited in the embodiments of the present disclosure.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exist alone. In addition, a character "/" herein generally indicates that the associated objects before and after this character are in an "or" relationship.

Terms used in the implementations of the present disclosure are only used to explain the specific embodiments of the present disclosure, but are not intended to limit the present disclosure. The terms such as "first," "second," "third," "fourth", etc., in the specification, claims and drawings of the present disclosure are used to distinguish different objects, rather than to describe a specific order. In addition, the terms "include", "comprise", "have" and any variations thereof, are intended to cover non-exclusive inclusions.

It should be understood that "indicate" and variations thereof mentioned in the embodiments of the present disclosure may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present disclosure, the term "correspond" and variations thereof may mean that there is a direct correspondence or an indirect correspondence between the two, or may mean that there is an association relationship between the two, or may mean a relationship of indicating and being indicated, or a relationship of configuring and being configured, or the like.

In the embodiments of the present disclosure, the "predefined" or "pre-configured" and variations thereof may be implemented by pre-saving corresponding codes, tables or other manners that may be used to indicate related information, in the device (for example, including the terminal device and the network device), and the present disclosure does not limit its specific implementation. For example, the predefined may refer to what is defined in a protocol.

In the embodiments of the present disclosure, the term "protocol" may refer to a standard protocol in the field of communications, for example, the "protocol" may be an evolution of the existing LTE protocol, NR protocol, Wi-Fi protocol, or a protocol related to other relevant communication systems, and the present disclosure does not limit the protocol type.

In order to better understand the embodiments of the present disclosure, the zero power consumption device related to the present disclosure will be described.

In recent years, the zero power consumption device has become more widely used. A typical zero power consumption device is radio frequency identification (RFID), which is a technology that enables contactless automatic transmission and identification of tag information by means of spatial coupling for wireless radio frequency signals. An RFID tag is also referred to as a "radio frequency tag" or an "electronic tag". Types of electronic tags divided according to different schemes of power supply, may be divided into an active electronic tag, a passive electronic tag and a semi-passive electronic tag. The active electronic tag is also referred to as an initiative electronic tag, which means that power for the operation of the electronic tag is supplied by a battery. The battery, memory and antenna(s) together constitute the active electronic tag, which is different from the scheme of activation of the passive radio frequency, the active electronic tag always transmits information via a set frequency band before the battery is replaced. The passive electronic tag is also referred to as an inactive electronic tag, which does not support a built-in battery. When the passive electronic tag is close to a reader/writer, the tag is in a near field range formed by radiation of antenna(s) of the reader/writer, and the antenna(s) of the electronic tag generates an induced current via electromagnetic induction, and the induced current drives a chip circuit of the electronic tag. The chip circuit transmits identity information stored in the tag to the reader/writer via the antenna(s) of the electronic tag. The semi-initiative electronic tag inherits advantages of the passive electronic tag which include small size, light weight, low price and long service life. A built-in battery only provides power for a small number of circuits in a chip when there is no reader/writer accessing, and only when there is a reader/writer accessing, the built-in battery supplies power to the RFID chip, to increase a reading/writing distance of the tag further and improve reliability of the communication.

The RFID is a wireless communication technology. The most basic RFID system includes two parts: an electronic tag and a reader/writer. The electronic tag includes a coupling component and a chip. Each electronic tag has a unique electronic code, and is placed on a measured target to achieve a purpose of marking a target object. The reader/writer can not only read information on the electronic tag, but also write information on the electronic tag, and provide the electronic tag with power required for communication. As illustrated in FIG. 2, after the electronic tag enters the electromagnetic field, the electronic tag receives a radio frequency signal transmitted from the reader/writer, and the passive electronic tag or the inactive electronic tag obtains power by using the electromagnetic field generated in space, to transmit information stored in the electronic tag out. The reader/writer reads the information and decodes the information to identify the electronic tag.

Key technologies of zero power consumption communication include power harvesting, back scattering communication, and low power consumption computing. As illustrated in FIG. 2, a typical zero power consumption communication system includes a reader/writer and a zero power consumption terminal. The reader/writer transmits a radio wave, to supply power to the zero power consumption terminal. A power harvesting module installed in the zero power consumption terminal may harvest the power carried by the radio wave in space (a radio wave emitted by the reader/writer is illustrated in FIG. 2), to drive a low power consumption computing module of the zero power consumption terminal and implement back scattering communication. After obtaining the power, the zero power consumption terminal may receive control signaling from the reader/writer and transmit data to the reader/writer by means of back scattering based on the control signaling. The transmitted data may come from data stored in the zero power consumption terminal itself (e.g., an identity or pre-written information, a production date, a brand, a manufacturer of a product, etc.). The zero power consumption terminal may also be loaded with various sensors, so as to report the data harvested by various sensors based on a zero power consumption mechanism.

In order to better understand the embodiments of the present disclosure, back scattering communication (Back Scattering) related to the present disclosure will be described.

As illustrated in FIG. 3, the zero power consumption device (i.e., a back scattering tag in FIG. 3) receives a carrier signal transmitted from a back scattering reader/writer, and harvests power by a wireless radio frequency (RF) power harvesting module. Then a low power consumption processing module (a logic processing module in FIG. 3) is operated to modulate the incoming signal and to perform back scattering.

The main features of the back scattering communication are as follows:
(1) the terminal does not actively transmit a signal, but implements back scattering communication by modulating the incoming signal;
(2) the terminal does not rely on a traditional active power amplifier transmitter, but uses a low power consumption computing unit, which greatly decreases complexity of the hardware;
(3) combined with power harvesting, battery-free communication may be achieved.

In order to better understand the embodiments of the present disclosure, RF power harvesting related to the present disclosure will be described.

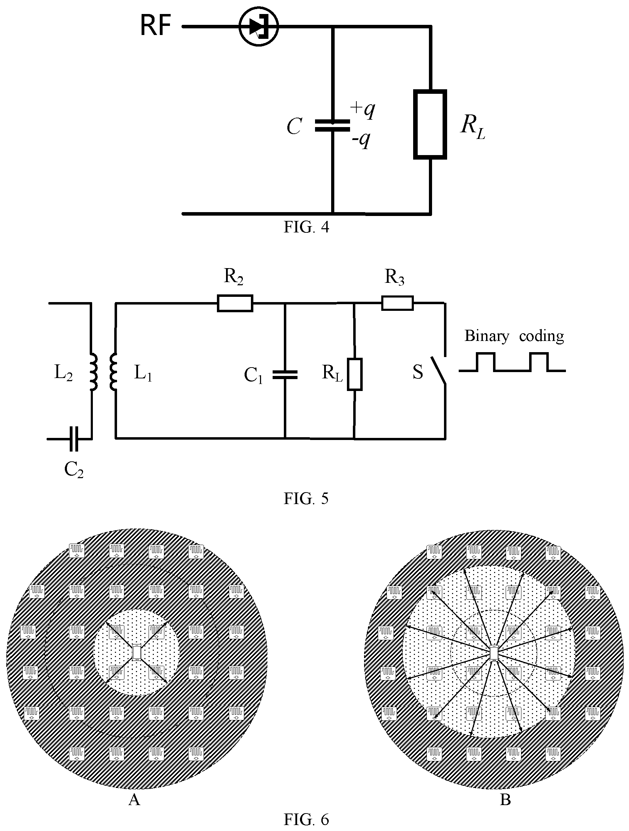

As illustrated in FIG. 4, the RF module is used to harvest electromagnetic wave power in space via electromagnetic induction, and then to achieve driving of a load circuit (e.g., low power consumption computing, sensor(s), etc.), which may achieve battery-free.

In order to better understand the embodiments of the present disclosure, the load modulation related to the present disclosure will be described.

Load modulation is a method that is often used by the electronic tag to transmit data to the reader/writer. The load modulation adjusts electrical parameters of an oscillation circuit of the electronic tag according to a rhythm of a data stream, to enable that the magnitude and phase of the impedance of the electronic tag are changed accordingly, thereby completing a process of modulation. There are two main schemes of the load modulation technology: resistive load modulation and capacitive load modulation. In the resistive load modulation, the load is connected in parallel with a resistor, called a load modulation resistor, and the resistor is turned on and turned off according to a clock of the data stream, and the turn-on and turn-off of a switch S is controlled by binary data encoding. A circuit schematic diagram of the resistive load modulation is illustrated in FIG. 5.

In the capacitive load modulation, the load is connected in parallel with a capacitor, which replaces the load modulation resistor controlled by the binary data encoding in FIG. 5.

In order to better understand the embodiments of the present disclosure, encoding technologies related to the present disclosure will be described.

Data transmitted by the electronic tag may be represented as the binary "1" and " 0" by different forms of codes. A wireless radio frequency identification system usually uses one of the following encoding methods: reverse non-return-to-zero (NRZ) encoding, Manchester encoding, unipolar return-to-zero (Unipolar RZ) encoding, differential bi-phase (DBP) encoding, Miller encoding with differential encoding. Generally speaking, different pulse signals are used to represent 0 and 1.

In order to better understand the embodiments of the present disclosure, a power supply signal in the zero power consumption communication system related to the present disclosure will be described.

In terms of a carrier of the power supply signal, the carrier may be a base station, a smart phone, a smart gateway, a charging station, a micro base station, or the like.

In terms of a frequency band, a radio wave used for power supply may be a low frequency, a medium frequency, a high frequency, or the like.

In terms of a waveform, a radio wave used for power supply may be a sine wave, a square wave, a triangle wave, a pulse, a rectangular wave, or the like. In addition, the radio wave used for power supply may be a continuous wave or a discontinuous wave (i.e., allowing for a certain amount of time interruptions).

The power supply signal may be a certain signal specified in the 3rd Generation Partnership Project (3GPP) standard, for example, a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), and a physical broadcast channel (PBCH), etc.

In order to better understand the embodiments of the present disclosure, a trigger signal in the zero power consumption communication system related to the present disclosure will be described.

In terms of a carrier of the trigger signal, the carrier may be a base station, a smart phone, a smart gateway, or the like.

In terms of a frequency band, a radio wave used for triggering may be a low frequency, a medium frequency, a high frequency, or the like.

In terms of a waveform, a radio wave used for triggering may be a sine wave, a square wave, a triangle wave, a pulse, a rectangular wave, or the like. In addition, the radio wave used for triggering may be a continuous wave or a discontinuous wave (i.e., allowing for a certain amount of time interruptions).

The trigger signal may be a certain signal specified in the 3GPP standard, for example, SRS, PUSCH, PRACH, PUCCH, PDCCH, PDSCH, or PBCH, etc; or the trigger signal may also be a new signal.

In order to better understand the embodiments of the present disclosure, a cellular passive Internet of Things related to the present disclosure will be described.

As 5G industry applications increase, there are more and more types and application scenarios of the connected objects, and there will be higher requirements on price and power consumption of the communication terminal. Application of the passive IoT device with free battery and low cost will become a key technology of the cellular IoT, which enriches the types and number of 5G network-connected terminals and truly achieves the Internet of Everything. The passive IoT device may be based on the existing zero power consumption device, such as the RFID technology, and extended on this basis to be applicable for the cellular IoT.

In order to better understand the embodiments of the present disclosure, classification of the zero power consumption terminal related to the present disclosure will be described.

Based on power sources and usage schemes of the zero power consumption terminal, the zero power consumption terminal may be classified into the following types.

### 1) Passive zero power consumption terminal

The zero power consumption terminal does not need a built-in battery. When the zero power consumption terminal approaches the network device (e.g., the reader/writer of the RFID system), the zero power consumption terminal is within a near-field range formed by radiation of antenna(s) of the network device. Therefore, antenna(s) of the zero power consumption terminal generates an induced current through electromagnetic induction, and the induced current drives the low power consumption chip circuit of the zero power consumption terminal, so as to implement demodulation of a signal on a forward link, modulation of a signal on a backward link and other operations. For a back scattering link, the zero power consumption terminal transmits a signal by the implementation of back scattering.

It may be seen that the passive zero power consumption terminal does not need a built-in battery to drive either in the forward link or the backward link, so that the passive zero power consumption terminal is a true zero power consumption terminal.

The passive zero power consumption terminal does not need a battery, and a radio frequency circuit and a baseband circuit are very simple, and for example, a low-noise amplifier (LNA), a power amplifier (PA), a crystal oscillator, an analog-to-digital converter (ADC) and other devices are not needed. Therefore, the passive zero power consumption terminal has many advantages, such as small size, light weight, very cheap price and long service life, etc.

### 2) Semi-passive zero power consumption terminal

The semi-passive zero power consumption terminal itself also does not install a conventional battery therein, but may harvest radio wave power by using an RF power harvesting module, and meanwhile, store the harvested power in a power storage unit (e.g., a capacitor). After obtaining the power, the power storage unit may drive a low power consumption chip circuit of the zero power consumption terminal, to implement demodulation of a signal on a forward link, modulation of a signal on a backward link and other operations. For a back scattering link, the zero power consumption terminal transmits a signal by the implementation of back scattering.

It may be seen that the semi-passive zero power consumption terminal does not need a built-in battery to drive either in the forward link or in the backward link. Although the power stored in the capacitor is used in the operation, the power comes from the radio power harvested by the power harvesting module. Therefore, the semi-passive zero power consumption terminal is also a true zero power consumption terminal.

The semi-passive zero power consumption terminal inherits many advantages of the passive zero power consumption terminal, and thus the semi-passive zero power consumption terminal has many advantages such as small size, light weight, very cheap price and long service life.

### 3) Active zero power consumption terminal

The zero power consumption terminal used in some scenarios may be an active zero power consumption terminal, and such a terminal may have a built-in battery. The battery is used to drive a low power consumption chip circuit of the zero power consumption terminal, to implement demodulation of a signal on a forward link, modulation of a signal on a backward link and other operations. However, for a back scattering link, the zero power consumption terminal transmits a signal by the implementation of back scattering. Therefore, the zero power consumption of such a terminal is mainly reflected in the fact that the signal transmission on the backward link does not need power of the terminal itself, but uses the scheme of the back scattering.

The active zero power consumption terminal with the built-in battery supplies power to an RFID chip, to increase a reading/writing distance of the tag and to improve reliability of the communication. Therefore, the active zero power consumption terminal is applied in some scenarios with relatively high requirements on the communication distance and reading latency, etc.

A part of the zero power consumption terminals, such as the semi-passive zero power consumption terminal or the active zero power consumption terminal, may have a capability of active transmission. That is, in addition to communicating by means of the back scattering, the backward link may also communicate by means of the active transmission.

In order to better understand the embodiments of the present disclosure, an indoor positioning technology related to the present disclosure will be described.

In an outdoor environment, mobile terminal positioning may achieve very high accuracy, which is profited from a global positioning system (GPS) and an independent cellular system. However, indoors and in an environment with deep shadow effects, satellite signals and cellular signals are often caused to be interrupted, thereby resulting in inability to position.

When the satellite positioning cannot be used in the indoor environment, an indoor positioning technology is used as an assisting positioning for the satellite positioning, to solve problems that satellite signals are weak when reaching the ground and cannot penetrate buildings. Finally, the current position of an object is positioned. The indoor positioning means that the location positioning is implemented in the indoor environment, an indoor location positioning system is integrated and formed by a variety of technologies mainly, such as wireless communication, base station positioning, and inertial navigation positioning, etc., so as to achieve position monitoring of people and objects, etc., in the indoor space.

In order to better understand the embodiments of the present disclosure, problems solved by the present disclosure will be described.

The zero power consumption device has a simple structure, low complexity, and low cost, may communicate by means of the back scattering, and may be deployed at large scale and high density. During the deployment, the zero power consumption device may be used as an anchor for positioning, to assist in positioning and improve accuracy of the positioning. For example, it is used in scenarios, such as cargo positioning in logistics scenarios, animal positioning in livestock farms, low power consumption positioning of individual users and objects, and indoor positioning in shopping malls, etc. The zero power consumption device deployed at high density and large scale may serve as an anchor device with a known position, which can support more precise positioning, and especially in some indoor environments, can greatly improve accuracy of the positioning.

It should be noted that when positioning is performed based on the back scattering signal of the zero power consumption device, multiple zero power consumption devices (i.e., anchor devices) are often distributed around a target device (which is a device with a positioning requirement). Generally, there will be multiple anchor devices that respond to incoming signal(s) (which may be transmitted from the target device or a positioning device) and perform back scattering communication.

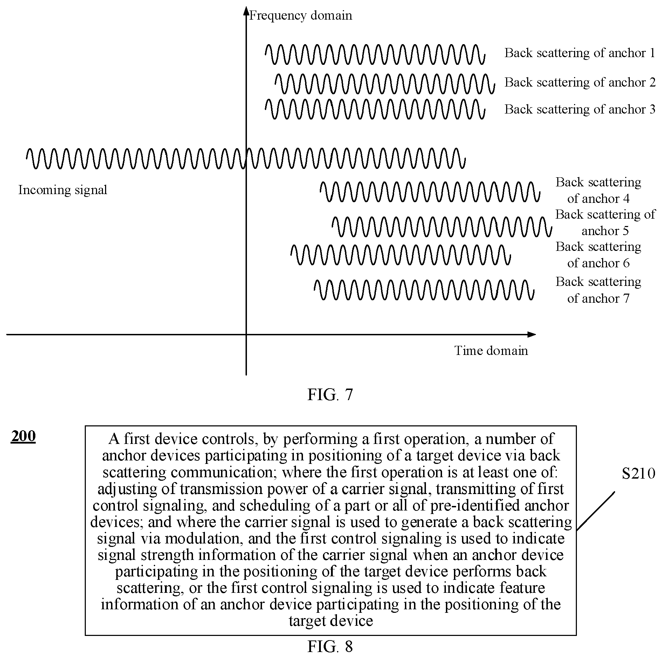

Generally, the stronger the signal strength of the incoming signal is, the stronger the signal strength of the back scattering signal is, and the better the performance of the data transmission is when the positioning processing is performed based on the back scattering signal. While, if the signal strength of the incoming signal is stronger, there will often be more anchor devices that can perform back scattering communication. Taking the target device transmitting the incoming signal as an example, as illustrated in FIG. 6, when the signal strength of the incoming signal is relatively low (A in FIG. 6), only anchor devices in a small area near the target device can be supported to perform back scattering communication; when strength or transmission power of the incoming signal is increased (B in FIG. 6), anchor devices in a larger area can be supported to perform back scattering communication. Specifically, mutual interference between back scattering of multiple anchor devices may be as illustrated in FIG. 7.

How to implement positioning by the zero power consumption device is a problem that needs to be solved. At the same time, when the number of deployed zero power consumption anchor devices is relatively large, how to control the number of anchors for assisting positioning based on back scattering communication and reduce the number of anchors is also a problem that needs to be solved. If the number of anchors for assisting positioning is too large, back scattering signals of various anchor devices will cause mutual interference as well, thereby affecting accuracy of the positioning.

When the zero power consumption device is used as the anchor device to assist in positioning, the zero power consumption device may be deployed at high density and in a wide range, due to its features of small size, low cost, and passive, etc. Therefore, if the number of anchor devices for back scattering communication is not constrained or controlled, it may be caused that the incoming signal transmitted from the target device or positioning device triggers a large number of anchor devices to perform back scattering communication, when positioning. In this case, these anchor devices may overlap in a time domain and/or frequency domain in back scattering communication, thereby affecting the positioning performance. On the other hand, as the number of back scattering signals increases, the corresponding computational complexity is progressively increased when positioning.

In order to improve the positioning performance and reduce the interference between the signals during the back scattering communication of the anchor devices, the number of anchor devices (which is at least greater than 3) for assisting positioning should be controlled. That is, it is not necessary for all anchor devices within a certain range around a device to be positioned (i.e., the target device) to participate in positioning, only a small number of anchor devices that meet the positioning requirement and accuracy need to perform back scattering communication for assisting positioning.

Based on the above problems, the present disclosure proposes a solution to control the number of anchor devices participating in positioning, to select a certain number of anchor devices to perform back scattering, which can reasonably control the number of anchor devices participating in the positioning of the target device via back scattering communication. It decreases the number of anchor devices for performing back scattering communication while meeting accuracy of the positioning, which reduces the mutual interference between back scattering signals, improves performance of the positioning, and reduces complexity of the positioning processing. When a positioning requirement cannot be met, the number of anchor devices for performing back scattering communication is increased, to support completion of the positioning.

In order to understand the technical solutions of the embodiments of the present disclosure, the technical solutions of the present disclosure will be described in detail below via specific embodiments. The following relevant technologies, as optional solutions, may be arbitrarily combined with the technical solutions of the embodiments of the present disclosure, and those combined solutions all fall within the protection scope of the embodiments of the present disclosure. The embodiments of the present disclosure include at least a part of the following contents.

FIG. 8 is a schematic flowchart of a wireless communication method 200 according to the embodiments of the present disclosure. As illustrated in FIG. 8, the wireless communication method 200 may include at least a part of the following contents.

S210, controlling, by a first device, by performing a first operation, a number of anchor devices participating in positioning of a target device via back scattering communication; where the first operation is at least one of: adjusting of transmission power of a carrier signal, transmitting of first control signaling, and scheduling of a part or all of pre-identified anchor devices; and where the carrier signal is used to generate a back scattering signal via modulation, and the first control signaling is used to indicate signal strength information of a carrier signal when an anchor device participating in the positioning of the target device performs back scattering, or the first control signaling is used to indicate feature information of an anchor device participating in the positioning of the target device.

In the embodiments of the present disclosure, the anchor device may be a zero power consumption device; specifically, the anchor device may obtain power by power harvesting, for communication, information collection and processing; or the anchor device may carry a battery to provide power required for the communication.

In the embodiments of the present disclosure, the carrier signal may also be referred to as an incoming signal of the back scattering signal. The carrier signal and the incoming signal may be interchangeable in the embodiments of the present disclosure. Specifically, the anchor device may receive the carrier signal by means of envelope detection, and the anchor device may modulate the carrier signal to generate the back scattering signal. Optionally, the anchor device and the target device may communicate via a PC5 (Proximity Communication 5) interface.

In the embodiments of the present disclosure, the "anchor device" may also be referred to as an "anchor terminal" or a "road side unit (RSU)" or an "other terminal" or a "relay terminal", which is not limited in the present disclosure.

In some embodiments, when the anchor device performs back scattering communication, a frequency point of the back scattering signal may be consistent with that of the carrier signal (also referred to as the incoming signal), or be frequency-shifted. When being frequency-shifted, offsets of the various anchor devices may be the same or different.

In some embodiments, when the anchor device performs back scattering communication, the back scattering signal may be triggered immediately after receiving the carrier signal (also referred to as the incoming signal), or may be performed after a certain time offset. When the time offset exists, offsets of the various anchor devices may be the same or different.

In some embodiments, the first device is the target device, or the first device is a positioning device. The target device is a device with a positioning requirement, and the positioning device is a device for positioning the target device.

In some embodiments, the positioning device may be a base station (e.g., gNB) or a location management function (LMF) entity. Certainly, the positioning device may also be other network elements or servers, which is not limited in the embodiments of the present disclosure.

In some embodiments, the positioning device may also be a terminal device, which is not limited in the embodiments of the present disclosure.

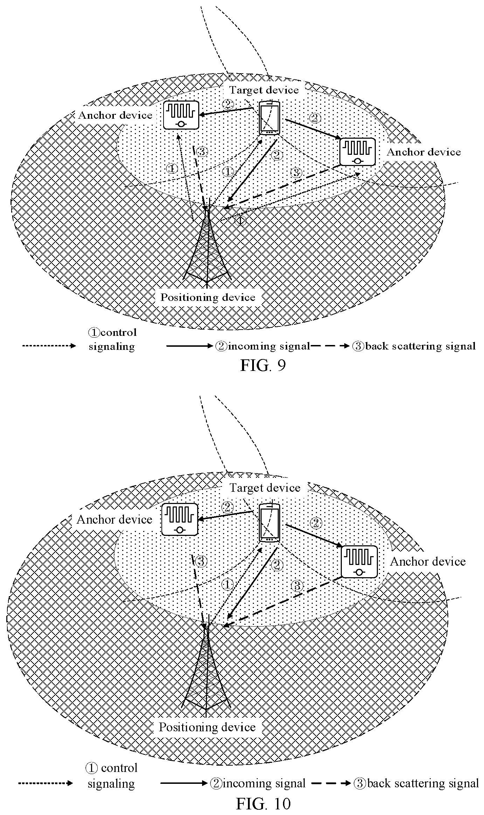

In some embodiments, a zero power consumption device with a known position (or referred to as a back scattering device with a capability of back scattering communication) is used as the anchor device, to assist in communicating. In the embodiments of the present disclosure, scenarios of positioning based on back scattering may be as illustrated in FIG. 9 to FIG. 12.

Example 1, as illustrated in FIG. 9, the anchor device receives control information transmitted from the positioning device, and the anchor device performs back scattering on an incoming signal transmitted from the target device, which is used by the positioning device to position the target device.

Example 1 is a positioning system based on three party devices, including the anchor device, the positioning device, and the target device. The anchor device assists the positioning device in positioning of the target device. The anchor device may receive the control information of the positioning device, and the anchor device performs, based on the control information transmitted from the positioning device, back scattering on the incoming signal transmitted from the target device. After receiving back scattering information of the anchor device, the positioning device may position the target device in conjunction with some positioning methods and the position information of the anchor device. Optionally, the positioning methods include but are not limited to at least one of: a positioning method based on signal strength, a positioning method based on phase, and a positioning method based on time difference of arrival (TDOA).

Example 2, as illustrated in FIG. 10, the anchor device performs back scattering on an incoming signal transmitted from the target device, which is used by the positioning device to position the target device.

Example 2 is a positioning system based on three party devices, including the anchor device, the positioning device, and the target device. The anchor device assists the positioning device in positioning of the target device. The anchor device may perform back scattering on the incoming signal transmitted from the target device. After receiving back scattering information of the anchor device, the positioning device may position the target device in conjunction with some positioning methods and the position information of the anchor device. Optionally, the positioning methods include but are not limited to at least one of: a positioning method based on signal strength, a positioning method based on phase and a positioning method based on time difference of arrival (TDOA).

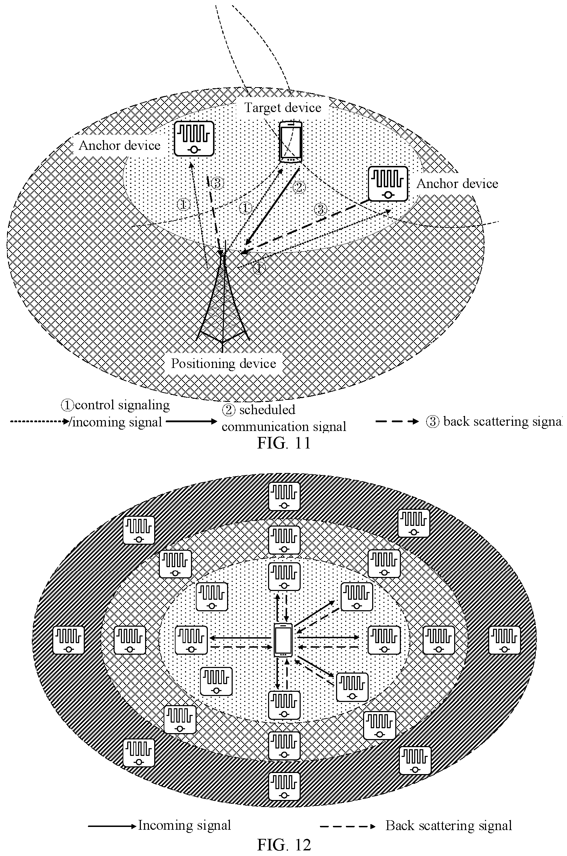

Example 3, as illustrated in FIG. 11, the anchor device performs back scattering based on an incoming signal (which may include the control information) transmitted from the positioning device, which is used by the positioning device to position the target device.

Different from the above Examples 1 and 2, in Example 3, the anchor device performs back scattering on the incoming signal transmitted from the positioning device, without associating with a signal of the target device. In this case, the positioning device further needs to communicate with the target device, and enables the positioning of the target device in conjunction with a signal path between the positioning device and the target device, a signal path between the positioning device and the anchor device, and the position information of the anchor device.

Example 4, as illustrated in FIG. 12, the anchor device performs back scattering based on an incoming signal (which may include the control information) transmitted from the target device, for the target device to perform positioning.

Different from the above Examples 1 to 3, in Example 4, the anchor device directly performs back scattering on the incoming signal transmitted from the target device. After receiving the back scattering signal from the anchor device, the target device performs positioning of the target device in conjunction with some positioning methods (e.g., a positioning method based on signal strength, a positioning method based on phase, and a positioning method based on TDOA, etc.) and the position information of the anchor device.

Based on the above Examples 1 to 4, it may be seen that when assisting in positioning, the anchor device may receive the control information or may not receive the control information; the anchor device may perform back scattering on the signal from the target device or may perform back scattering on the signal from the positioning device; the back scattering signal may be transmitted to the target device for the target device to perform positioning; the back scattering signal may also be transmitted to the positioning device for the positioning device to position the target device.

The embodiments of the present disclosure are intended to control the number of anchor devices participating in the positioning of the target device, to reduce interference between back scattering signals. The adjustments of the number of anchor devices for back scattering communication in other manners, are also within the protection scope of the present disclosure.

For example, different anchor devices may have different abilities of frequency-shifting of the carrier signal, and the number of anchor devices may be constrained by indicating a maximum range of frequency-shifting. Alternatively, filtering may be performed when receiving the back scattering, so as to reduce the number of the back scattering signals in the positioning processing.

For another example, the carrier signal may have different time domain/frequency domain/code domain features, or carry a special sequence identity, and different anchor devices have different requirements on these features and the sequence. The number of anchor devices participating in the positioning of the target device may be limited by controlling the feature of the carrier signal.

In some embodiments, the number of the anchor devices participating in positioning is N, where 3≤N≤X, N and X are both positive integers. That is, in the embodiment of the present disclosure, a certain number of anchor devices are selected to participate in positioning (i.e., transmitting the back scattering signal), so as to reduce interference between back scattering signals of the anchor devices, improve performance of the positioning, and reduce complexity of processing.

In some embodiments, a value of X may be related to a data processing capability of the receiving end of the back scattering signal, a time-frequency feature of the back scattering communication, or the like. For example, the value of X is related to whether the receiving end of the back scattering signal supports time division, frequency division, or code division of the back scattering communication, etc. For another example, the value of X is related to whether the receiving end of the back scattering signal may solve multiple superimposed back scattering signals and a maximum number of superimposed signals that can be allowed, etc.

It should be noted that, in the embodiments of the present disclosure, the "anchor device participating in positioning of a target device" may also be expressed as or replaced by the "anchor device transmitting a back scattering signal".

In some embodiments, in a case where the first operation is the adjusting of the transmission power of the carrier signal, the above S210 may specifically include:
in a case where a number of anchor devices currently participating in the positioning of the target device is less than a first threshold, increasing, by the first device, the number of the anchor devices participating in the positioning of the target device by increasing the transmission power of the carrier signal; and/or
in a case where the number of anchor devices currently participating in the positioning of the target device is greater than a second threshold, decreasing, by the first device, the number of the anchor devices participating in the positioning of the target device by decreasing the transmission power of the carrier signal.

In some embodiments, in a case where the first operation is the adjusting of the transmission power of the carrier signal, the above S210 may specifically include:
in a case where a number of anchor devices currently transmitting the back scattering signal is less than a first threshold, increasing, by the first device, the number of the anchor devices participating in the positioning of the target device by increasing the transmission power of the carrier signal; and/or
in a case where the number of anchor devices currently transmitting the back scattering signal is greater than a second threshold, decreasing, by the first device, the number of the anchor devices participating in the positioning of the target device by decreasing the transmission power of the carrier signal.

It should be noted that, for the anchor device, when the signal strength of the carrier signal (or referred to as an incoming signal) when reaching the anchor device, meets a threshold requirement, the anchor device may perform back scattering based on the carrier signal. Therefore, a method that may effectively control the number of anchor devices for performing back scattering during positioning is to control the transmission power (i.e., signal strength) of the carrier signal.

Specifically, the number of the anchor devices participating in the positioning of the target device may be controlled by adjusting the transmission power of the carrier signal.

In some embodiments, the first threshold may be agreed upon by a protocol, or the first threshold may be configured or indicated by a network device (e.g., an LMF entity) participating in positioning, or the first threshold may be determined by the target device (based on implementations).

In some embodiments, the second threshold may be agreed upon by a protocol, or the second threshold may be configured or indicated by a network device (e.g., an LMF entity) participating in positioning, or the second threshold may be determined by the target device (based on implementations).

Specifically, when the anchor device performs back scattering based on the carrier signal transmitted from the target device, power control may be performed on the carrier signal transmitted by the target device, to trigger the appropriate number of anchor devices (3≤N≤X) to perform back scattering communication, to assist in positioning. Specifically, it may be divided into the following two cases: (1) the anchor device performs back scattering based on the carrier signal transmitted from the target device, and the target device performs positioning based on the back scattering signal; (2) the anchor device performs back scattering based on the carrier signal transmitted from the target device, and the positioning device positions the target device based on the back scattering signal, and in some implementations, a positioning result of the target device may be transmitted to the target device.

Specifically, in a case where the target device performs positioning based on the back scattering signal, as illustrated in FIG. 12, when the target device performs positioning based on back scattering signals of surrounding anchor devices. The target device may first transmit a carrier signal with initial transmission power, and the surrounding anchor devices perform power harvesting on the carrier signal and perform back scattering communication based on the carrier signal. In this case, anchor device(s) far away from the target device cannot perform back scattering communication because the signal strength of the carrier signal when reaching the anchor device(s) is lower than a preset threshold (which is a threshold capable of performing back scattering communication). For example, when the target device transmits a signal with the initial transmission power, the number of anchor devices for performing back scattering communication may be too small (less than 3) or too large (greater than X), which is not conducive to performing positioning based on the back scattering signal. In this case, the target device may adjust the transmission power of the carrier signal to transmit the carrier signal again, that is, transmit the carrier signal with retransmission power, and in this case, perform the positioning based on back scattering signals of the appropriate number of anchor devices. If the number of anchor devices for performing back scattering communication is still too small or too large, the target device may adjust the transmission power of the carrier signal again.

In some embodiments, the transmission power of the carrier signal is adjusted based on one or more of power adjustment mechanisms as follows:
a power climbing mechanism, a power decreasing mechanism and a power adaptive adjustment mechanism.

Specifically, for example, in a case where the target device performs positioning based on the back scattering signal, the transmission power of the carrier signal is adjusted based on one or more of power adjustment mechanisms as follows: a power climbing mechanism, a power decreasing mechanism and a power adaptive adjustment mechanism.

Specifically, in the power climbing mechanism, the target device transmits a signal with lower initial transmission power, and then continuously increases the transmission power. In the power decreasing mechanism, the target device transmits a signal with higher initial transmission power, and then continuously decreases the transmission power. In the power adaptive adjustment mechanism, the target device transmits a signal with initial transmission power, and according to the number of the anchor devices participating in the positioning of the target device, determines to increase or decrease transmission power of the signal, and if the number of the anchor devices is relatively appropriate, the positioning process may be performed directly.

In some embodiments, in a case where the transmission power of the carrier signal is adjusted based on the power climbing mechanism or the power decreasing mechanism, the transmission power of the carrier signal is determined based on at least one of: initial transmission power, an adjustment count of the transmission power, a transmission count of the carrier signal, an adjustment step of the transmission power, and a delta value of the transmission power. Optionally, the adjustment step of the transmission power is a positive value.

That is, power of the carrier signal when the target device transmits the carrier signal may be determined based on the initial transmission power, the transmission count of the carrier signal, the adjustment step of the transmission power, the delta value of the transmission power or the like.

In some embodiments, in a case where the transmission power of the carrier signal is adjusted based on the power climbing mechanism or the power decreasing mechanism, the transmission power of the carrier signal is determined based on Formula 1 or Formula 2 as follows. POSITIONING_SIGNAL_POWER = InitialTransmissionPower + (POSITIONING_POWER_ADJUST COUNTER - 1) × POSITIONING_POWER_ADJUST_STEP

In Formula 1, *POSITIONING_SIGNAL_POWER* denotes current transmission power of the carrier signal, *InitialTransmissionPower* denotes the initial transmission power, *POSITIONING_POWER ADJUST COUNTER* denotes the adjustment count of the transmission power, and *POSITIONING_POWER_ADJUST_STEP* denotes the adjustment step of the transmission power. POSITIONING_SIGNAL POWER = InitialTransmissionPower + (POSITIONING_POWER_ADJUST_COUNTER - 1) × POSITIONING_POWER_ ADJUST _STEP + DELTA POSITIONING

In Formula 2, *POSITIONING_SIGNAL _POWER* denotes the current transmission power of the carrier signal, *InitialTransmissionPower* denotes the initial transmission power, *POSITIONING_POWER ADJUST COUNTER* denotes the adjustment count of the transmission power, *POSITIONING_POWER ADJUST STEP* denotes the adjustment step of the transmission power, and *DELTA_POSITIONING* denotes the delta value of the transmission power.

In some embodiments, transmission power of the carrier signal transmitted for a first time is the initial transmission power; and/or transmission power of the carrier signal transmitted for a non-first time is determined based on at least one of: transmission power of the carrier signal transmitted last time, the adjustment step of the transmission power, and the delta value of the transmission power.

That is, power of the carrier signal when the target device currently transmits the carrier signal may be determined according to the transmission power of the carrier signal transmitted last time, the adjustment step of the transmission power, the delta value of the transmission power, and the like.

In some embodiments, if the number of the anchor devices currently participating in the positioning of the target device is less than the first threshold, the adjustment step of the transmission power is a positive value; and/or if the number of the anchor devices currently participating in the positioning of the target device is greater than the second threshold, the adjustment step of the transmission power is a negative value.

In some embodiments, the transmission power of the carrier signal is determined based on the following Formula 3 or Formula 4. CURRENT POSITIONING_SIGNAL_POWER = LastPositioningSignalPower + POSITIONING_POWER_ADJUST_STEP

In Formula 3, *CURRENT_POSITIONING_SIGNAL_POWER* denotes current transmission power of the carrier signal, *LastPositioningSignalPower* denotes transmission power of the carrier signal transmitted last time, and *POSITIONING_POWER ADJUST STEP* denotes the adjustment step of the transmission power. CURRENT_POSITIONING_SIGNAL POWER = LastPositioningSignalPower + POSITIONING_POWER_ADJUST_STEP + DELTA_POSITIONING

In Formula 4, *CURRENT_POSITIONING_SIGNAL_POWER* denotes current transmission power of the carrier signal, *LastPositioningSignalPower* denotes the transmission power of the carrier signal transmitted last time, *POSITIONING_POWER ADJUST STEP* denotes the adjustment step of the transmission power, and *DELTA_POSITIONING_*denotes the delta value of the transmission power.

In some embodiments, the initial transmission power is determined by the target device or a positioning device, or the initial transmission power is agreed upon by a protocol, or the initial transmission power is configured or indicated by a network device participating in positioning of the target device.

In some embodiments, the adjustment step of the transmission power is determined by the target device or the positioning device, or the adjustment step of the transmission power is agreed upon by a protocol, or the adjustment step of the transmission power is configured or indicated by a network device participating in the positioning of the target device.

In some embodiments, the delta value of the transmission power is associated with at least one of: a waveform of the carrier signal, a duty ratio of the carrier signal, a type of the target device, and a type of the anchor device.

For example, the delta value of the transmission power is associated with the waveform of the carrier signal, and different waveforms correspond to different delta values. These delta values may be determined by measurement or agreed upon by a protocol.

For example, the delta value of the transmission power is associated with the duty ratio of the carrier signal, and different duty ratios correspond to different delta values. These delta values may be determined by measurement or agreed upon by a protocol.

For example, types of the anchor devices in the system are different, some of the anchor devices have power storage capability and some of the anchor devices do not have power storage capability, or the like, and delta values of different types of terminals are different, or may also be agreed upon by the protocol.

In some embodiments, the delta value of the transmission power is zero, or the delta value of the transmission power is a non-zero value.

It should be noted that, in a case where the delta value of the transmission power is zero, the case may correspond to the above Formula 1 or Formula 3.

In some embodiments, the delta value of the transmission power is determined by the target device or the positioning device, or the delta value of the transmission power is agreed upon by the protocol, or the delta value of the transmission power is configured or indicated by a network device participating in the positioning of the target device.

In some embodiments, an adjustment parameter of the transmission power of the carrier signal is pre-configured; where the adjustment parameter of the transmission power of the carrier signal includes at least one of: a power adjustment mechanism and related parameter of the transmission power of the carrier signal, a maximum transmission count of the carrier signal, and a time interval between two adjacent transmissions of the carrier signal. Optionally, in a case where the first device is the target device, the adjustment parameter of the transmission power of the carrier signal is configured or indicated by the positioning device via control information.

Specifically, for example, for the target device, the carrier signal may be transmitted multiple times with different transmission power based on the control information of the positioning device, so as to trigger different number of the anchor devices to perform back scattering on each transmission of the carrier signal.

Specifically, for example, for the positioning device, positioning may be performed based on back scattering signals of different number of anchor devices, corresponding to different transmissions of the carrier signal of the target device.

Specifically, in a case where the positioning device positions the target device based on the back scattering signal, as illustrated in FIG. 9 to FIG. 11, the positioning device positions the target device based on the back scattering signal of the anchor device. In this case, the target device may first transmit the carrier signal with the initial transmission power, and the surrounding anchor devices perform power harvesting on the carrier signal and perform back scattering communication based on the carrier signal. In this case, anchor device(s) far away from the target device cannot perform back scattering communication because the signal strength of the carrier signal when reaching the anchor device(s) is lower than a preset threshold (which is a threshold capable of performing back scattering communication). In a case where the number of the anchor devices for performing back scattering communication is too large or too small, the performance of the positioning will be affected. In a case where the target device transmits the carrier signal with the initial transmission power, the number of the anchor devices for performing back scattering communication may be too small or too large, which is not conducive to the positioning method based on the back scattering signal. In this case, the transmission power of the carrier signal transmitted from the target device may be adjusted, that is, the carrier signal is transmitted with the retransmission power. In this case, positioning is performed based on back scattering signals of the appropriate number of anchor devices. If the number of anchors for back scattering communication is still too small or too large, the transmission power of the carrier signal transmitted from the target device may be adjusted again.

In some embodiments, in a case where the first device is the target device, the transmission power of the carrier signal is configured or indicated by the positioning device via control information. That is, before transmitting the carrier signal each time, the positioning device may dynamically configure or indicate the transmission power of the carrier signal via the control information.

Specifically, the transmission power of the carrier signal may be configured for the target device, by the positioning device via the control information before performing positioning. That is, the positioning device will perform multiple positioning processes, and each time when the positioning is performed, may schedule the target device to transmit the carrier signal with different transmission power of the carrier signal. That is, in a case where the large transmission power of the carrier signal last time results in the large number of the anchor devices for back scattering communication, the current transmission power of the carrier signal may be reduced; in a case where the small transmission power of the carrier signal last time results in the small number of the anchor devices for back scattering communication, the current transmission power of the carrier signal may be increased.

In some embodiments, the transmission power of the carrier signal is selected from multiple pieces of transmission power;
the multiple pieces of transmission power are determined by the target device or a positioning device, or the multiple pieces of transmission power are agreed upon by a protocol, or the multiple pieces of transmission power are configured or indicated by a network device participating in the positioning of the target device.

Specifically, the transmission power of the carrier signal may be selected from multiple pieces of the transmission power based on actual requirements.

In some embodiments, in a case where the first operation is the transmitting of the first control signaling, and the first control signaling is used to indicate the signal strength information of the carrier signal when the anchor device participating in the positioning of the target device performs back scattering, an anchor device whose measured signal strength of the carrier signal is less than the signal strength information indicated by the first control signaling does not participate in the positioning of the target device.

Specifically, the anchor device participating in the positioning of the target device may be controlled via the first control signaling, so that even if the carrier signal received by the anchor device may meet the threshold requirement for performing back scattering communication, the anchor device still does not perform back scattering, that is, the anchor device does not participate in the positioning of the target device.

In some embodiments, the first control signaling is carried by the carrier signal, or the first control signaling is carried by other signals other than the carrier signal.

In some embodiments, the signal strength information indicated by the first control signaling is reference signal received power (RSRP), or a received signal strength indication (RSSI), or a signal noise ratio (SNR).

For example, the anchor device measures the signal strength of the carrier signal. In a case where RSRP of the measured carrier signal is less than the RSRP indicated by the first control signaling, the anchor device does not participate in the positioning of the target device; and in a case where the RSRP of the measured carrier signal is greater than or equal to the RSRP indicated by the first control signaling, the anchor device participates in the positioning of the target device.

For example, the anchor device measures the signal strength of the carrier signal. In a case where RSSI of the measured carrier signal is less than the RSSI indicated by the first control signaling, the anchor device does not participate in the positioning of the target device; and in a case where the RSSI of the measured carrier signal is greater than or equal to the RSSI indicated by the first control signaling, the anchor device participates in the positioning of the target device.

For example, the anchor device measures the signal strength of the carrier signal. In a case where SNR of the measured carrier signal is less than the SNR indicated by the first control signaling, the anchor device does not participate in the positioning of the target device; and in a case where the SNR of the measured carrier signal is greater than or equal to the SNR indicated by the first control signaling, the anchor device participates in the positioning of the target device.

In some embodiments, the first control signaling indicates first signal strength and second signal strength, and only the anchor device(s) with signal strength between the first signal strength and the second signal strength performs back scattering (or participates in the positioning of the target device). In a case where the number of anchor devices for performing back scattering is inappropriate, a new set of the first signal strength and the second signal strength is configured.

In some embodiments, the signal strength information indicated by the first control signaling is an index of a target signal strength threshold among M signal strength thresholds, where M is a positive integer.

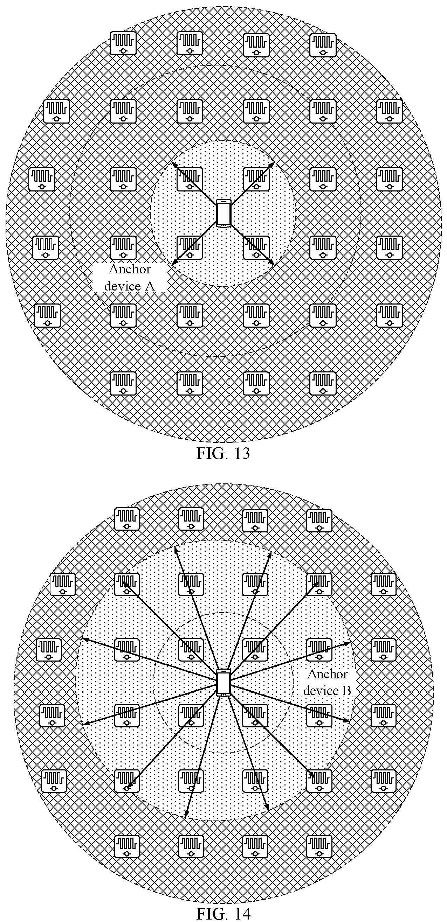

For example, the anchor device measures the signal strength of the carrier signal. In a case where the measured signal strength of the carrier signal is less than the target signal strength threshold indicated by the first control signaling, the anchor device does not participate in the positioning of the target device; in a case where the measured signal strength of the carrier signal is greater than or equal to the target signal strength threshold indicated by the first control signaling, the anchor device participates in the positioning of the target device. As illustrated in FIG. 13, if the signal strength of the carrier signal measured by an anchor device A is less than the target signal strength threshold indicated by the first control signaling, the anchor device A does not participate in the positioning of the target device. As illustrated in FIG. 14, if the signal strength of the carrier signal measured by an anchor device B is greater than or equal to the target signal strength threshold indicated by the first control signaling, the anchor device B participates in the positioning of the target device.

In some embodiments, the M signal strength thresholds are agreed upon by a protocol, or the M signal strength thresholds are pre-configured by the target device or the positioning device, or the M signal strength thresholds are pre-configured or indicated by a network device participating in the positioning of the target device.

In the embodiments, in a case where the first control signaling causes the number of anchor devices participating in the positioning of the target device to be small (e.g., less than 3) or large (e.g., greater than X), new first control signaling needs to be transmitted again for adjustment.

In some embodiments, in a case where the first operation is the transmitting of the first control signaling, and the first control signaling is used to indicate the signal strength information of the carrier signal when the anchor device participating in positioning of the target device performs back scattering, the above S210 may specifically include:
in a case where a number of anchor devices currently participating in the positioning of the target device is less than a first threshold, increasing, by the first device, the number of the anchor devices participating in the positioning of the target device by decreasing the signal strength information indicated by the first control signaling that is re-transmitted; and/or
in a case where the number of anchor devices currently participating in the positioning of the target device is greater than a second threshold, decreasing, by the first device, the number of the anchor devices participating in the positioning of the target device by increasing the signal strength information indicated by the first control signaling that is re-transmitted.

In some embodiments, in a case where the first operation is the transmitting of the first control signaling, and the first control signaling is used to indicate the signal strength information of the carrier signal when the anchor device participating in the positioning of the target device performs back scattering, the above S210 may specifically include:
in a case where a number of anchor devices currently transmitting the back scattering signal is less than a first threshold, increasing, by the first device, the number of the anchor devices transmitting the back scattering signal by decreasing the signal strength information indicated by the first control signaling that is re-transmitted; and/or
in a case where a number of anchor devices currently transmitting the back scattering signal is greater than a second threshold, decreasing, by the first device, the number of the anchor devices transmitting the back scattering signal by increasing the signal strength information indicated by the first control signaling that is re-transmitted.

In some embodiments, the first control signaling may be transmitted from the target device or from the positioning device.

Specifically, taking the target device transmitting the first control signaling as an example, the processing flow is as follows: ① the target device transmits the first control signaling and the carrier signal (also referred to as an incoming signal), and the first control signaling indicates a requirement of the signal strength of the carrier signal reaching the anchor device in a case where the anchor device performs back scattering; ② the anchor device determines, based on the first control signaling and the carrier signal, whether to perform back scattering communication; in a case where it needs to perform back scattering communication, the anchor device performs the back scattering communication based on the carrier signal; ③ the target device receives back scattering signals of multiple anchor devices, for performing positioning. In a case where the number of back scattering signals is too small (less than 3, positioning cannot be completed), or in a case where the number of back scattering signals is too large (greater than X, back scattering signals that may be used for positioning cannot be screened out), the control signaling is adjusted, and the above process is repeated again.

In some embodiments, in a case where the first operation is the transmitting of the first control signaling, and the first control signaling is used to indicate the feature information of the anchor device participating in the positioning of the target device, an anchor device that does not meet the feature information indicated by the first control signaling does not participate in the positioning of the target device.

In some embodiments, the feature information indicated by the first control signaling is an identity (ID) of the anchor device. Specifically, all anchor devices have their own identity (ID), and an ID feature of the anchor device may be indicated by the first control signaling.

In some embodiments, the feature information indicated by the first control signaling is a group identity (group ID) of the anchor device. Specifically, the anchor device may have its own identity (ID) and its own group identity (group ID). In this case, the group ID of the anchor device may be indicated by the first control signaling.

In some embodiments, the feature information indicated by the first control signaling is X bit or bits in the identity (ID) of the anchor device. For example, the feature information indicated by the first control signaling is the last X bit(s) of the identity (ID) of the anchor device, or the feature information indicated by the first control signaling is the first X bit(s) of the identity (ID) of the anchor device, or the feature information indicated by the first control signaling is the middle X bit(s) of the identity (ID) of the anchor device.

In some embodiments, the feature information indicated by the first control signaling is parameters Y and Z associated with the anchor device; where X is a positive integer, an anchor device that meets mod(ID, Y)=Z is the anchor device that meets the feature information indicated by the first control signaling, ID denotes the identity of the anchor device or some bit(s) in the identity, and mod denotes a modulo operation.

Specifically, the anchor device that meets the ID feature indicated by the first control signaling may perform back scattering communication, but whether it is capable of performing the back scattering communication, depends on the signal strength of the carrier signal. Only in a case where the signal strength may support the anchor device to perform power harvesting and back scattering communication, the anchor device will actually perform back scattering communication.

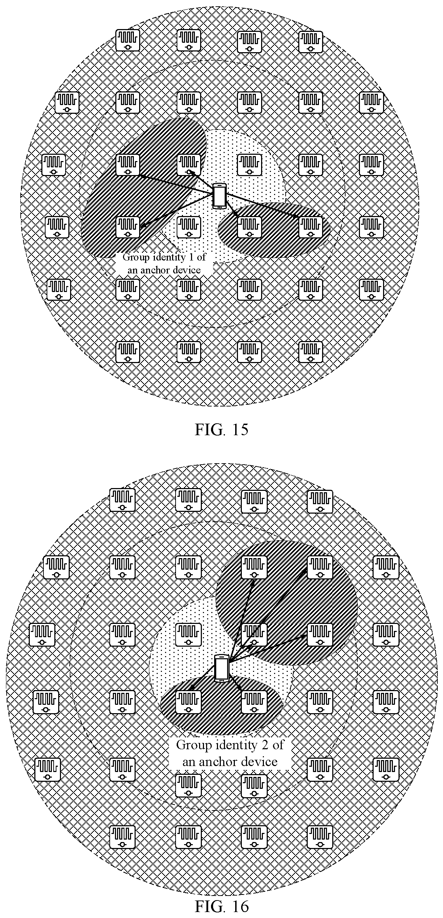

Specifically, for example, as illustrated in FIG. 15, the feature information indicated by the first control signaling is a group identity 1 of the anchor device. Anchor devices in an anchor device group identified by the group identity 1 of the anchor device will actually perform back scattering communication only in a case where the signal strength may support power harvesting and back scattering communication.

Specifically, for example, as illustrated in FIG. 16, the feature information indicated by the first control signaling is a group identity 2 of the anchor device. Anchor devices in an anchor device group identified by the group identity 2 of the anchor device will actually perform back scattering communication only in a case where the signal strength may support power harvesting and back scattering communication.

In some embodiments, the first control signaling is carried by the carrier signal, or the first control signaling is carried by other signals other than the carrier signal.

In some embodiments, the first control signaling may be transmitted from the target device to the anchor device; or the first control signaling may be transmitted from the positioning device to the anchor device; or the first control signaling may be transmitted from the positioning device to the target device, and then from the target device to the anchor device.

In the embodiments, in a case where the first control signaling causes the number of anchor devices participating in the positioning of the target device to be small (e.g., less than 3) or large (e.g., greater than X), new first control signaling needs to be transmitted again for adjustment.

It should be noted that, in a case where the merged processing on anchor devices for performing back scattering communication in multiple processes is supported, the total number of anchor devices triggered by current first control signaling and previous first control signaling is considered here. For example, the first control signaling transmitted for the first time triggers two anchor devices, and the first control signaling transmitted for the second time newly triggers different two anchor devices, and a total of four anchor devices are obtained. If the positioning can be performed in this case, the first control signaling does not need to be transmitted for the third time.

In some embodiments, in a case where the first operation is the transmitting of the first control signaling, and the first control signaling is used to indicate the feature information of the anchor device participating in the positioning of the target device, the above S210 may specifically include:
in a case where a number of anchor devices currently participating in the positioning of the target device is less than a first threshold, increasing, by the first device, the number of the anchor devices participating in the positioning of the target device by modifying the feature information indicated by the first control signaling that is re-transmitted; and/or
in a case where the number of anchor devices currently participating in the positioning of the target device is greater than a second threshold, decreasing, by the first device, the number of the anchor devices participating in the positioning of the target device by modifying the feature information indicated by the first control signaling that is re-transmitted.

In some embodiments, in a case where the first operation is the transmitting of the first control signaling, and the first control signaling is used to indicate the feature information of the anchor device participating in the positioning of the target device, the above S210 may specifically include:
in a case where a number of anchor devices currently transmitting the back scattering signal is less than a first threshold, increasing, by the first device, the number of the anchor devices transmitting the back scattering signal by modifying the feature information indicated by the first control signaling that is re-transmitted; and/or
in a case where the number of anchor devices currently transmitting the back scattering signal is greater than a second threshold, decreasing, by the first device, the number of the anchor devices transmitting the back scattering signal by modifying the feature information indicated by the first control signaling that is re-transmitted.

In some embodiments, in a case where the first operation is the scheduling of the part or all of the pre-identified anchor devices, anchor device(s) scheduled by the first device is randomly selected, or anchor device(s) scheduled by the first device is determined based on signal strength of the back scattering communication.

Specifically, in a case where multiple anchor devices perform back scattering simultaneously, interference will occur between the multiple anchor devices. In this case, the target device or the positioning device may first identify surrounding anchor devices. Then, the surrounding anchor devices are scheduled to perform back scattering communication, by means of scheduling, so as to implement the positioning processing of the target device.

Specifically, for example, the target device or the positioning device transmits a radio frequency signal to the surrounding anchor devices, to trigger the surrounding anchor devices to perform back scattering. For anchor device(s) for which the carrier signal meets the threshold, it may perform back scattering communication. In this case, the signal of the back scattering communication will carry identity information of the anchor device, which is used by the target device or the positioning device to identify the anchor device. In particular, the back scattering signal of the anchor device may have a time domain offset and/or a frequency domain offset, and the time domain offset and/or the frequency domain offset may be the same or different. After the target device or the positioning device receives back scattering signals of the multiple anchor devices, if the positioning of the target device can be completed, the positioning is directly performed. Otherwise, if there are too many back scattering signals, resulting in greater interference, the target device or the positioning device first identifies anchor device(s) in the surrounding environment. Then, the target device or the positioning device performs a single time or multiple times of scheduling by means of scheduling, to schedule back scattering communication of multiple anchor devices, to implement the positioning of the target device. If the number of back scattering signals is small, the target device or the positioning device increases the transmission power of the carrier signal, and re-identifies surrounding anchor devices.

In some embodiments, in a case where the first operation is the scheduling of the part or all of the pre-identified anchor devices, the above S210 may specifically include:
in a case where a number of anchor devices currently participating in the positioning of the target device is less than a first threshold, increasing, by the first device, the number of the anchor devices participating in the positioning of the target device by increasing a number of scheduled anchor devices; and/or
in a case where the number of anchor devices currently participating in the positioning of the target device is greater than a second threshold, decreasing, by the first device, the number of the anchor devices participating in the positioning of the target device by decreasing a number of scheduled anchor devices.

In some embodiments, in a case where the first operation is the scheduling of the part or all of the pre-identified anchor devices, the above S210 may specifically include:
in a case where a number of anchor devices currently transmitting the back scattering signal is less than a first threshold, increasing, by the first device, the number of the anchor devices transmitting the back scattering signal by increasing a number of scheduled anchor devices; and/or
in a case where the number of anchor devices currently transmitting the back scattering signal is greater than a second threshold, decreasing, by the first device, the number of the anchor devices transmitting the back scattering signal by decreasing a number of scheduled anchor devices.

In some embodiments, the positioning process is divided into the following two stages.

Stage 1: the target device triggers the surrounding anchor devices to perform back scattering communication. In this case, the anchor device will carry identity information, which is used by the target device to identify the anchor device. Through Stage 1, the target device may identify anchor device(s) that exist in its surroundings.

Stage 2: the target device performs positioning based on the back scattering signal from Stage 1. If the positioning cannot be completed due to poor signal quality (low signal strength, strong interference), multiple times of scheduling of back scattering is performed by a method of polling. That is, X (X>=3) anchor devices may be randomly selected, for X times of scheduling of back scattering. That is, the anchor devices for performing back scattering communication every time are controlled (by indicating the terminal identity), and the target device performs positioning based on back scattering signals obtained by the X times of scheduling. Here, X may be agreed upon by a protocol or selected by the target device itself based on an implementation.

In particular, if the signal strength of the back scattering communication may be reserved in Stage 1, X anchor devices with the largest signal strength may be selected, or X anchor devices may be randomly selected from Y anchor devices with the largest signal strength, in Stage 2.

Therefore, in the embodiments of the present disclosure, the first device may control, by performing the first operation, the number of the anchor devices participating in the positioning of the target device via back scattering communication. That is, the first device can reasonably control the number of the anchor devices participating in the positioning of the target device via back scattering communication. It decreases the number of anchor devices for performing back scattering communication while meeting accuracy of the positioning, which reduces the mutual interference between back scattering signals and reduces complexity of the positioning processing. When a positioning requirement cannot be met, the number of anchor devices for performing back scattering communication is increased, to support completion of the positioning.

That is, through the embodiments of the present disclosure, it is possible to avoid a situation where the number of anchors for performing back scattering communication is too large when positioning is performed based on the back scattering communication, which causes the mutual interference, and affects performance of the positioning while increasing complexity of the positioning processing. By controlling the transmission power of the carrier signal used for back scattering communication, or by transmitting the first control information to the anchor device, or by pre-identifying the anchor device to performing back scattering communication by means of scheduling, the number of anchor devices for performing back scattering can be reasonably controlled, and the number of anchors is reduced, computational complexity is reduced, and interference between the back scattering signals of the anchor devices is reduced, while the requirement of the positioning accuracy is met.

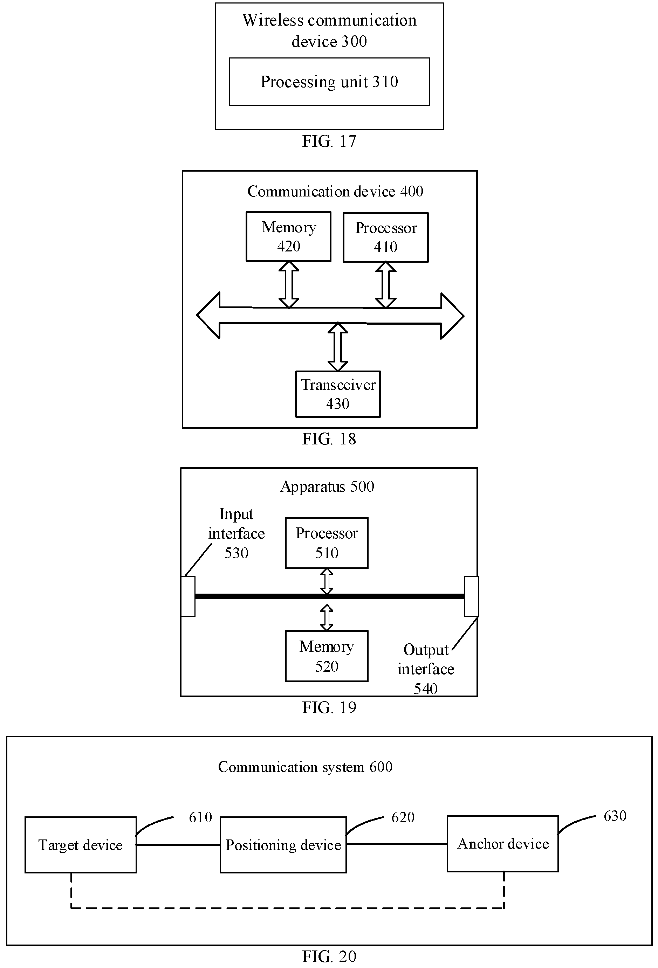

The method embodiments of the present disclosure are described in detail above in conjunction with FIG. 8 to FIG. 16. Apparatus embodiments of the present disclosure will be described in detail below in conjunction with FIG. 17 to FIG. 20. It should be understood that the apparatus embodiments and the method embodiments correspond to each other, and the similar descriptions of the apparatus embodiments may refer to the method embodiments.

FIG. 17 illustrates a schematic block diagram of a wireless communication device 300 according to the embodiments of the present disclosure. The wireless communication device 300 is a first device. As illustrated in FIG. 17, the wireless communication device 300 includes:
a processing unit 310, configured to control, by performing a first operation, a number of anchor devices participating in positioning of a target device via back scattering communication;
where the first operation is at least one of: adjusting of transmission power of a carrier signal, transmitting of first control signaling, and scheduling of a part or all of pre-identified anchor devices; and
where the carrier signal is used to generate a back scattering signal via modulation, and the first control signaling is used to indicate signal strength information of the carrier signal when an anchor device participating in the positioning of the target device performs back scattering, or the first control signaling is used to indicate feature information of an anchor device participating in the positioning of the target device.

In some embodiments, in a case where the first operation is the adjusting of the transmission power of the carrier signal, the processing unit 310 is specifically configured to:
in a case where a number of anchor devices currently participating in the positioning of the target device is less than a first threshold, increase the number of the anchor devices participating in the positioning of the target device by increasing the transmission power of the carrier signal; and/or
in a case where the number of anchor devices currently participating in the positioning of the target device is greater than a second threshold, decrease the number of the anchor devices participating in the positioning of the target device by decreasing the transmission power of the carrier signal.

In some embodiments, the transmission power of the carrier signal is adjusted based on one or more of power adjustment mechanisms as follows:
a power climbing mechanism, a power decreasing mechanism and a power adaptive adjustment mechanism.

In some embodiments, in a case where the transmission power of the carrier signal is adjusted based on the power climbing mechanism or the power decreasing mechanism, the transmission power of the carrier signal is determined based on at least one of: initial transmission power, an adjustment count of the transmission power, a transmission count of the carrier signal, an adjustment step of the transmission power, and a delta value of the transmission power.

In some embodiments, the adjustment step of the transmission power is a positive value.

In some embodiments, the transmission power of the carrier signal is determined based on a formula as follows: POSITIONING_SIGNAL POWER = InitialTransmissionPower + (POSITIONING POWER ADJUST COUNTER - 1) × POSITIONING_POWER_ADJUST_STEP; where *POSITIONING_SIGNAL _POWER* denotes current transmission power of the carrier signal, *InitialTransmissionPower* denotes the initial transmission power, *POSITIONING_POWER ADJUST COUNTER* denotes the adjustment count of the transmission power, and *POSITIONING_POWER*_*ADJUST_STEP* denotes the adjustment step of the transmission power.

In some embodiments, the transmission power of the carrier signal is determined based on a formula as follows: POSITIONING_SIGNAL POWER = InitialTransmissionPower + (POSITIONING_POWER ADJUST COUNTER - 1) × POSITIONING_POWER_ ADJUST _STEP + DELTA POSITIONING; where *POSITIONING_SIGNAL _POWER* denotes current transmission power of the carrier signal, *InitialTransmissionPower* denotes the initial transmission power, *POSITIONING_POWER ADJUST COUNTER* denotes the adjustment count of the transmission power, *POSITIONING_POWER_ADJUST_STEP* denotes the adjustment step of the transmission power, and *DELTA _POSITIONING* denotes the delta value of the transmission power.

In some embodiments, transmission power of the carrier signal transmitted for a first time is initial transmission power; and/or
transmission power of the carrier signal transmitted for a non-first time is determined based on at least one of: transmission power of the carrier signal transmitted last time, an adjustment step of the transmission power, and a delta value of the transmission power.

In some embodiments, if the number of the anchor devices currently participating in the positioning of the target device is less than the first threshold, the adjustment step of the transmission power is a positive value; and/or if the number of the anchor devices currently participating in the positioning of the target device is greater than the second threshold, the adjustment step of the transmission power is a negative value.

In some embodiments, the transmission power of the carrier signal is determined based on a formula as follows: CURRENT_POSITIONING_SIGNAL_POWER = LastPositioningSignalPower + POSITIONING POWER ADJUST_STEP; where *CURRENT POSITIONING_SIGNAL POWER* denotes current transmission power of the carrier signal, *LastPositioningSignalPower* denotes the transmission power of the carrier signal transmitted last time, and *POSITIONING_POWER ADJUST STEP* denotes the adjustment step of the transmission power.

In some embodiments, the transmission power of the carrier signal is determined based on a formula as follows: CURRENT POSITIONING_SIGNAL POWER = LastPositioningSignalPower + POSITIONING_POWER_ADJUST STEP + DELTA_POSITIONING; where *CURRENT_POSITIONING_SIGNAL_POWER* denotes current transmission power of the carrier signal, *LastPositioningSignalPower* denotes the transmission power of the carrier signal transmitted last time, *POSITIONING_POWER ADJUST STEP* denotes the adjustment step of the transmission power, and *DELTA_POSITIONING* denotes the delta value of the transmission power.

In some embodiments, the initial transmission power is determined by the target device or a positioning device, or the initial transmission power is agreed upon by a protocol, or the initial transmission power is configured or indicated by a network device participating in the positioning of the target device.

In some embodiments, the adjustment step of the transmission power is determined by the target device or a positioning device, or the adjustment step of the transmission power is agreed upon by a protocol, or the adjustment step of the transmission power is configured or indicated by a network device participating in the positioning of the target device.

In some embodiments, the delta value of the transmission power is associated with at least one of: a waveform of the carrier signal, a duty ratio of the carrier signal, a type of the target device, and a type of the anchor device.

In some embodiments, the delta value of the transmission power is zero, or the delta value of the transmission power is a non-zero value.

In some embodiments, the delta value of the transmission power is determined by the target device or a positioning device, or the delta value of the transmission power is agreed upon by a protocol, or the delta value of the transmission power is configured or indicated by a network device participating in the positioning of the target device.

In some embodiments, an adjustment parameter of the transmission power of the carrier signal is pre-configured; and
where the adjustment parameter of the transmission power of the carrier signal includes at least one of: a power adjustment mechanism and related parameter of the transmission power of the carrier signal, a maximum transmission count of the carrier signal, and a time interval between two adjacent transmissions of the carrier signal.

In some embodiments, in a case where the first device is the target device, the adjustment parameter of the transmission power of the carrier signal is configured or indicated by a positioning device via control information.

In some embodiments, in a case where the first device is the target device, the transmission power of the carrier signal is configured or indicated by a positioning device via control information.

In some embodiments, the transmission power of the carrier signal is selected from multiple pieces of transmission power;
where the multiple pieces of transmission power are determined by the target device or a positioning device, or the multiple pieces of transmission power are agreed upon by a protocol, or the multiple pieces of transmission power are configured or indicated by a network device participating in the positioning of the target device.

In some embodiments, in a case where the first operation is the transmitting of the first control signaling, and the first control signaling is used to indicate the signal strength information of the carrier signal when the anchor device participating in the positioning of the target device performs back scattering, an anchor device whose measured signal strength of the carrier signal is less than the signal strength information indicated by the first control signaling does not participate in the positioning of the target device.

In some embodiments, the signal strength information indicated by the first control signaling is reference signal received power (RSRP), a received signal strength indication (RSSI), or a signal noise ratio (SNR); or the signal strength information indicated by the first control signaling is an index of a target signal strength threshold among M signal strength thresholds, where M is a positive integer.

In some embodiments, the M signal strength thresholds are agreed upon by a protocol, or the M signal strength thresholds are pre-configured by the target device or a positioning device, or the M signal strength thresholds are pre-configured or indicated by a network device participating in the positioning of the target device.

In some embodiments, the processing unit 310 is specifically configured to:
in a case where a number of anchor devices currently participating in the positioning of the target device is less than a first threshold, increase the number of the anchor devices participating in the positioning of the target device by decreasing the signal strength information indicated by the first control signaling that is re-transmitted; and/or
in a case where the number of anchor devices currently participating in the positioning of the target device is greater than a second threshold, decrease the number of the anchor devices participating in the positioning of the target device by increasing the signal strength information indicated by the first control signaling that is re-transmitted.

In some embodiments, in a case where the first operation is the transmitting of the first control signaling, and the first control signaling is used to indicate the feature information of the anchor device participating in the positioning of the target device, an anchor device that does not meet the feature information indicated by the first control signaling does not participate in the positioning of the target device.

In some embodiments, the feature information indicated by the first control signaling is an identity of the anchor device, or the feature information indicated by the first control signaling is a group identity of the anchor device, or the feature information indicated by the first control signaling is X bit or bits in an identity of the anchor device, or the feature information indicated by the first control signaling is a parameter Y and a parameter Z associated with the anchor device;
where X is a positive integer, an anchor device that meets mod(ID, Y)=Z is the anchor device that meets the feature information indicated by the first control signaling, ID denotes the identity of the anchor device, and mod denotes a modulo operation.

In some embodiments, the processing unit 310 is specifically configured to:
in a case where a number of anchor devices currently participating in the positioning of the target device is less than a first threshold, increase the number of the anchor devices participating in the positioning of the target device by modifying the feature information indicated by the first control signaling that is re-transmitted; and/or
in a case where the number of anchor devices currently participating in the positioning of the target device is greater than a second threshold, decrease the number of the anchor devices participating in the positioning of the target device by modifying the feature information indicated by the first control signaling that is re-transmitted.

In some embodiments, the first control signaling is carried by the carrier signal, or the first control signaling is carried by other signals other than the carrier signal.

In some embodiments, in a case where the first operation is the scheduling of the part or all of the pre-identified anchor devices, an anchor device scheduled by the first device is randomly selected, or an anchor device scheduled by the first device is determined based on signal strength of the back scattering communication.

In some embodiments, the processing unit 310 is specifically configured to:
in a case where a number of anchor devices currently participating in the positioning of the target device is less than a first threshold, increase the number of the anchor devices participating in the positioning of the target device by increasing a number of scheduled anchor devices; and/or
in a case where the number of anchor devices currently participating in the positioning of the target device is greater than a second threshold, decrease the number of the anchor devices participating in the positioning of the target device by decreasing a number of scheduled anchor devices.

In some embodiments, the first device is the target device, or the first device is a positioning device;
where the target device is a device with a positioning requirement, and the positioning device is a device positioning the target device.

In some embodiments, the above processing unit may be one or more processors.

It should be understood that the wireless communication device 300 according to the embodiments of the present disclosure may correspond to the first device in the method embodiments of the present disclosure, and the above-mentioned and other operations and/or functions of various units in the wireless communication device 300 are respectively for implementing the corresponding procedure of the first device in the method 200 illustrated in FIG. 8, which will not be repeated here for the sake of brevity.

FIG. 18 is a schematic structural diagram of a communication device 400 provided in the embodiments of the present disclosure. The communication device 400 shown in FIG. 18 includes a processor 410, and the processor 410 may call and run a computer program from a memory to implement the method in the embodiments of the present disclosure.

In some embodiments, as illustrated in FIG. 18, the communication device 400 may further include a memory 420. The processor 410 may call and run a computer program from the memory 420, to implement the method in the embodiments of the present disclosure.

The memory 420 may be a separate device independent from the processor 410, or may be integrated into the processor 410.

In some embodiments, as illustrated in FIG. 18, the communication device 400 may further include a transceiver 430. The processor 410 may control the transceiver 430 to communicate with other devices, and specifically, to transmit information or data to other devices, or receive information or data transmitted by other devices.

The transceiver 430 may include a transmitter and a receiver. The transceiver 430 may further include an antenna (antennas), and the number of antennas may be one or more.

In some embodiments, the processor 410 may implement the functions of the processing unit in the wireless communication device, which will not be repeated here for the sake of brevity.

In some embodiments, the communication device 400 may specifically be the wireless communication device of the embodiments of the present disclosure, and the communication device 400 may implement corresponding procedures implemented by the first device in the various methods of the embodiments of the present disclosure, which will not be repeated here for the sake of brevity.

FIG. 19 is a schematic structural diagram of an apparatus in the embodiments of the present disclosure. The apparatus 500 shown in FIG. 19 includes a processor 510, the processor 510 may call and run a computer program from a memory to implement the method in the embodiments of the present disclosure.

In some embodiments, as illustrated in FIG. 19, the apparatus 500 may further include a memory 520. The processor 510 may call and run a computer program from the memory 520 to implement the method in the embodiments of the present disclosure.

The memory 520 may be a separate device independent of the processor 510, or may be integrated into the processor 510.

In some embodiments, the apparatus 500 may further include an input interface 530. The processor 510 may control the input interface 530 to communicate with other devices or chips, and specifically, to acquire information or data transmitted by other devices or chips. Optionally, the processor 510 may be positioned inside a chip or outside a chip.

In some embodiments, the processor 510 may implement the functions of the processing unit in the wireless communication device, which will not be repeated here for the sake of brevity.

In some embodiments, the apparatus 500 may further include an output interface 540. The processor 510 may control the output interface 540 to communicate with other devices or chips, and specifically, to output information or data to other devices or chips. Optionally, the processor 510 may be positioned inside a chip or outside a chip.

In some embodiments, the apparatus may be applied to the wireless communication device in the embodiments of the present disclosure, and the apparatus may implement the corresponding procedure implemented by the first device in various methods of the embodiments of the present disclosure, which will not be repeated here for the sake of brevity.

In some embodiments, the apparatus mentioned in the embodiments of the present disclosure may be a chip. For example, it may be a system-level chip, a system chip, a chip system, a system-on-chip chip, or the like.

FIG. 20 is a schematic block diagram of a communication system 600 provided by the embodiments of the present disclosure. As illustrated in FIG. 20, the communication system 600 includes a target device 610, a positioning device 620, and an anchor device 630.

The target device 610 may be used to implement the corresponding functions implemented by the target device in the above methods, the positioning device 620 may be used to implement the corresponding functions implemented by the positioning device in the above methods, and the anchor device 630 may be used to implement the corresponding functions implemented by the anchor device in the above methods, which will not be repeated here for the sake of brevity.

It should be understood that the processor in the embodiments of the present disclosure may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present disclosure may be implemented or performed. A general-purpose processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present disclosure may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

The embodiments of the present disclosure further provide a computer-readable storage medium for storing a computer program.

In some embodiments, the computer-readable storage medium may be applied to the wireless communication device in the embodiments of the present disclosure, and the computer program causes a computer to perform the corresponding procedure implemented by the first device in the various methods of the embodiments of the present disclosure, which will not be repeated here for the sake of brevity.

The embodiments of the present disclosure further provide a computer program product including computer program instructions.

In some embodiments, the computer program product may be applied to the wireless communication device in the embodiments of the present disclosure, and the computer program instructions cause a computer to perform the corresponding procedure implemented by the first device in the various methods of the embodiments of the present disclosure, which will not be repeated here for the sake of brevity.

The embodiments of the present disclosure further provide a computer program.

In some embodiments, the computer program may be applied to the wireless communication device in the embodiments of the present disclosure, the computer program when being executed on a computer, causes the computer to perform the corresponding procedure implemented by the first device in various methods of the embodiments of the present disclosure, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the present disclosure, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in the form of a software functional unit and sold or used as an independent product, they may be stored in a computer-readable storage medium. For this understanding, the technical solutions of the present disclosure essentially, or a part of the technical solutions that contribute to the prior art, or a part of the technical solutions, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present disclosure. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of the claims.

## Claims

1. A wireless communication method, comprising:
controlling, by a first device, by performing a first operation, a number of anchor devices participating in positioning of a target device via back scattering communication;
wherein the first operation is at least one of: adjusting of transmission power of a carrier signal, transmitting of first control signaling, and scheduling of a part or all of pre-identified anchor devices; and
wherein the carrier signal is used to generate a back scattering signal via modulation, and the first control signaling is used to indicate signal strength information of the carrier signal when an anchor device participating in the positioning of the target device performs back scattering, or the first control signaling is used to indicate feature information of an anchor device participating in the positioning of the target device.

2. The method according to claim 1, wherein
in a case where the first operation is the adjusting of the transmission power of the carrier signal, controlling, by the first device, by performing the first operation, the number of the anchor devices participating in the positioning of the target device via the back scattering communication, comprises:
in a case where a number of anchor devices currently participating in the positioning of the target device is less than a first threshold, increasing, by the first device, the number of the anchor devices participating in the positioning of the target device by increasing the transmission power of the carrier signal; and/or
in a case where the number of anchor devices currently participating in the positioning of the target device is greater than a second threshold, decreasing, by the first device, the number of the anchor devices participating in the positioning of the target device by decreasing the transmission power of the carrier signal.

3. The method according to claim 2, wherein
the transmission power of the carrier signal is adjusted based on one or more of power adjustment mechanisms as follows:
a power climbing mechanism, a power decreasing mechanism and a power adaptive adjustment mechanism.

4. The method according to claim 3, wherein
in a case where the transmission power of the carrier signal is adjusted based on the power climbing mechanism or the power decreasing mechanism, the transmission power of the carrier signal is determined based on at least one of: initial transmission power, an adjustment count of the transmission power, a transmission count of the carrier signal, an adjustment step of the transmission power, and a delta value of the transmission power.

5. The method according to claim 4, wherein the adjustment step of the transmission power is a positive value.

6. The method according to claim 4 or 5, wherein
the transmission power of the carrier signal is determined based on a formula as follows: POSITIONING SIGNAL _POWER = InitialTransmissionPower + POSITIONING_POWER ADJUST COUNTER - 1) × POSITIONING_POWER_ADJUST _STEP; wherein *POSITIONING_SIGNAL*_*POWER* denotes current transmission power of the carrier signal, *InitialTransmissionPower* denotes the initial transmission power, *POSITIONING_POWER_ADJUST_COUNTER* denotes the adjustment count of the transmission power, and *POSITIONING_POWER*_*ADJUST_STEP* denotes the adjustment step of the transmission power.

7. The method according to claim 4 or 5, wherein
the transmission power of the carrier signal is determined based on a formula as follows: POSITIONING_SIGNAL POWER = InitialTransmissionPower + (POSITIONING_POWER ADJUST COUNTER - 1) × POSITIONING_POWER ADJUST STEP + DELTA_POSITIONING_ wherein *POSITIONING_SIGNAL _POWER* denotes current transmission power of the carrier signal, *InitialTransmissionPower* denotes the initial transmission power, *POSITIONING_POWER ADJUST COUNTER* denotes the adjustment count of the transmission power, *POSITIONING_POWER_ADJUST_STEP* denotes the adjustment step of the transmission power, and *DELTA_POSITIONING* denotes the delta value of the transmission power.

8. The method according to claim 3, wherein
transmission power of the carrier signal transmitted for a first time is initial transmission power; and/or
transmission power of the carrier signal transmitted for a non-first time is determined based on at least one of: transmission power of the carrier signal transmitted last time, an adjustment step of the transmission power, and a delta value of the transmission power.

9. The method according to claim 8, wherein
if the number of the anchor devices currently participating in the positioning of the target device is less than the first threshold, the adjustment step of the transmission power is a positive value; and/or if the number of the anchor devices currently participating in the positioning of the target device is greater than the second threshold, the adjustment step of the transmission power is a negative value.

10. The method according to claim 8 or 9, wherein
the transmission power of the carrier signal is determined based on a formula as follows: CURRENT_POSITIONING_SIGNAL_POWER = LastPositioningSignalPower + POSITIONING_POWER ADJUST STEP; wherein *CURRENT_POSITIONING_SIGNAL POWER* denotes current transmission power of the carrier signal, *LastPositioningSignalPower* denotes the transmission power of the carrier signal transmitted last time, and *POSITIONING_POWER ADJUST STEP* denotes the adjustment step of the transmission power.

11. The method according to claim 8 or 9, wherein
the transmission power of the carrier signal is determined based on a formula as follows: CURRENT_POSITIONING_SIGNAL_POWER = LastPositioningSignalPower + POSITIONING_POWER ADJUST_STEP + DELTA_POSITIONING; wherein *CURRENT_POSITIONING_SIGNAL POWER* denotes current transmission power of the carrier signal, *LastPositioningSignalPower* denotes the transmission power of the carrier signal transmitted last time, *POSITIONING_POWER ADJUST STEP* denotes the adjustment step of the transmission power, and *DELTA_POSITIONING* denotes the delta value of the transmission power.

12. The method according to any one of claims 4 to 11, wherein
the initial transmission power is determined by the target device or a positioning device, or the initial transmission power is agreed upon by a protocol, or the initial transmission power is configured or indicated by a network device participating in the positioning of the target device.

13. The method according to any one of claims 4 to 12, wherein
the adjustment step of the transmission power is determined by the target device or a positioning device, or the adjustment step of the transmission power is agreed upon by a protocol, or the adjustment step of the transmission power is configured or indicated by a network device participating in the positioning of the target device.

14. The method according to any one of claims 4 to 13, wherein the delta value of the transmission power is associated with at least one of: a waveform of the carrier signal, a duty ratio of the carrier signal, a type of the target device, and a type of the anchor device.

15. The method according to any one of claims 4 to 14, wherein
the delta value of the transmission power is zero, or the delta value of the transmission power is a non-zero value.

16. The method according to any one of claims 4 to 15, wherein
the delta value of the transmission power is determined by the target device or a positioning device, or the delta value of the transmission power is agreed upon by a protocol, or the delta value of the transmission power is configured or indicated by a network device participating in the positioning of the target device.

17. The method according to any one of claims 3 to 16, wherein
an adjustment parameter of the transmission power of the carrier signal is pre-configured;
wherein the adjustment parameter of the transmission power of the carrier signal comprises at least one of: a power adjustment mechanism and related parameter of the transmission power of the carrier signal, a maximum transmission count of the carrier signal, and a time interval between two adjacent transmissions of the carrier signal.

18. The method according to claim 17, wherein in a case where the first device is the target device, the adjustment parameter of the transmission power of the carrier signal is configured or indicated by a positioning device via control information.

19. The method according to claim 2, wherein in a case where the first device is the target device, the transmission power of the carrier signal is configured or indicated by a positioning device via control information.

20. The method according to claim 2, wherein
the transmission power of the carrier signal is selected from multiple pieces of transmission power;
wherein the multiple pieces of transmission power are determined by the target device or a positioning device, or the multiple pieces of transmission power are agreed upon by a protocol, or the multiple pieces of transmission power are configured or indicated by a network device participating in the positioning of the target device.

21. The method according to claim 1, wherein
in a case where the first operation is the transmitting of the first control signaling, and the first control signaling is used to indicate the signal strength information of the carrier signal when the anchor device participating in the positioning of the target device performs back scattering, an anchor device whose measured signal strength of the carrier signal is less than the signal strength information indicated by the first control signaling does not participate in the positioning of the target device.

22. The method according to claim 21, wherein
the signal strength information indicated by the first control signaling is reference signal received power (RSRP), a received signal strength indication (RSSI), or a signal noise ratio (SNR); or the signal strength information indicated by the first control signaling is an index of a target signal strength threshold among M signal strength thresholds, wherein M is a positive integer.

23. The method according to claim 22, wherein
the M signal strength thresholds are agreed upon by a protocol, or the M signal strength thresholds are pre-configured by the target device or a positioning device, or the M signal strength thresholds are pre-configured or indicated by a network device participating in the positioning of the target device.

24. The method according to any one of claims 21 to 23, wherein controlling, by the first device, by performing the first operation, the number of the anchor devices participating in the positioning of the target device via the back scattering communication, comprises:
in a case where a number of anchor devices currently participating in the positioning of the target device is less than a first threshold, increasing, by the first device, the number of the anchor devices participating in the positioning of the target device by decreasing the signal strength information indicated by the first control signaling that is re-transmitted; and/or
in a case where the number of anchor devices currently participating in the positioning of the target device is greater than a second threshold, decreasing, by the first device, the number of the anchor devices participating in the positioning of the target device by increasing the signal strength information indicated by the first control signaling that is re-transmitted.

25. The method according to claim 1, wherein in a case where the first operation is the transmitting of the first control signaling, and the first control signaling is used to indicate the feature information of the anchor device participating in the positioning of the target device, an anchor device that does not meet the feature information indicated by the first control signaling does not participate in the positioning of the target device.

26. The method according to claim 25, wherein
the feature information indicated by the first control signaling is an identity of the anchor device, or the feature information indicated by the first control signaling is a group identity of the anchor device, or the feature information indicated by the first control signaling is X bit or bits in an identity of the anchor device, or the feature information indicated by the first control signaling is a parameter Y and a parameter Z associated with the anchor device;
wherein X is a positive integer, an anchor device that meets mod(ID, Y)=Z is the anchor device that meets the feature information indicated by the first control signaling, ID denotes the identity of the anchor device, and mod denotes a modulo operation.

27. The method according to claim 25 or 26, wherein controlling, by the first device, by performing the first operation, the number of the anchor devices participating in the positioning of the target device via the back scattering communication, comprises:
in a case where a number of anchor devices currently participating in the positioning of the target device is less than a first threshold, increasing, by the first device, the number of the anchor devices participating in the positioning of the target device by modifying the feature information indicated by the first control signaling that is re-transmitted; and/or
in a case where the number of anchor devices currently participating in the positioning of the target device is greater than a second threshold, decreasing, by the first device, the number of the anchor devices participating in the positioning of the target device by modifying the feature information indicated by the first control signaling that is re-transmitted.

28. The method according to any one of claims 21 to 27, wherein the first control signaling is carried by the carrier signal, or the first control signaling is carried by other signals other than the carrier signal.

29. The method according to claim 1, wherein
in a case where the first operation is the scheduling of the part or all of the pre-identified anchor devices, an anchor device scheduled by the first device is randomly selected, or an anchor device scheduled by the first device is determined based on signal strength of the back scattering communication.

30. The method of claim 29, wherein controlling, by the first device, by performing the first operation, the number of the anchor devices participating in the positioning of the target device via the back scattering communication, comprises:
in a case where a number of anchor devices currently participating in the positioning of the target device is less than a first threshold, increasing, by the first device, the number of the anchor devices participating in the positioning of the target device by increasing a number of scheduled anchor devices; and/or
in a case where the number of anchor devices currently participating in the positioning of the target device is greater than a second threshold, decreasing, by the first device, the number of the anchor devices participating in the positioning of the target device by decreasing a number of scheduled anchor devices.

31. The method according to any one of claims 1 to 30, wherein
the first device is the target device, or the first device is a positioning device;
wherein the target device is a device with a positioning requirement, and the positioning device is a device positioning the target device.

32. A wireless communication device, wherein the wireless communication device is a first device, and the wireless communication device comprises:
a processing unit, configured to control, by performing a first operation, a number of anchor devices participating in positioning of a target device via back scattering communication;
wherein the first operation is at least one of: adjusting of transmission power of a carrier signal, transmitting of first control signaling, and scheduling of a part or all of pre-identified anchor devices; and
wherein the carrier signal is used to generate a back scattering signal via modulation, and the first control signaling is used to indicate signal strength information of the carrier signal when an anchor device participating in the positioning of the target device performs back scattering, or the first control signaling is used to indicate feature information of an anchor device participating in the positioning of the target device.

33. A terminal device, comprising: a processor and a memory, wherein the memory is configured to store a computer program, and the processor is configured to call and run the computer program stored in the memory, to enable the terminal device to perform the method according to any one of claims 1 to 31.

34. A chip, comprising: a processor, configured to call a computer program from a memory and run the computer program, to enable a device equipped with the chip to perform the method according to any one of claims 1 to 31.

35. A computer-readable storage medium, for storing a computer program, wherein the computer program, when being executed, implements the method according to any one of claims 1 to 31.

36. A computer program product, comprising computer program instructions, wherein the computer program instructions, when being executed, implement the method according to any one of claims 1 to 31.

37. A computer program, wherein the computer program, when being executed, implements the method according to any one of claims 1 to 31.
